# EUROPÄISCHE PATENTANMELDUNG

(11) **EP 2 886 570 A1**
(43) Veröffentlichungstag der Anmeldung: **24.06.2015**
(21) Anmeldenummer: 13197947.8
(22) Anmeldetag: 18.12.2013
(51) Int. Cl.: C08G 18/42, C08G 18/08, C09D 175/14, C09D 175/16, C08F 290/14

(54) **Wässriges Beschichtungsmittel und Herstellung von Mehrschichtlackierungen unter Einsatz des Beschichtungsmittels**

(71) Anmelder: BASF Coatings GmbH, 48165 Münster (DE)
(72) Erfinder: Steinmetz, Bernhard, 97535 Rütschenhausen (DE); Luhmann, Nadia, 97753 Karlstadt-Stetten (DE); Jankowski, Peggy, 97261 Güntersleben (DE); Matura, Michael, 97318 Kitzingen (DE); Reuter, Hardy, 48167 Münster (DE); Hoffmann, Peter, 48308 Senden (DE)

(57) **Zusammenfassung**

Die vorliegende Erfindung betrifft ein wässriges Beschichtungsmittel enthaltend mindestens eine wässrige Dispersion enthaltend mindestens ein Mischpolymerisat (MP), wobei das Mischpolymerisat (MP) herstellbar ist, durch (i) Vorlage einer wässrigen Dispersion mindestens eines Polyurethans, und anschließend (ii) Polymerisation einer Mischung von olefinisch ungesättigten Monomeren in Gegenwart des Polyurethans aus (i), wobei (a) ein wasserlöslicher Initiator verwendet wird, (b) die Zudosierung der olefinisch ungesättigten Monomere so erfolgt, dass in der Reaktionslösung eine Konzentration von 6,0 Gew.-%, bezogen auf die Gesamtmenge an zur Polymerisation eingesetzten olefinisch ungesättigten Monomeren, während der gesamten Reaktionsdauer nicht überschritten wird, und (c) die Mischung der olefinisch ungesättigten Monomere mindestens ein mehrfach olefinisch ungesättigtes Monomer enthält, mindestens ein lineares hydroxyfunktionelles Reaktionsprodukt (R) mit einer Säurezahl kleiner 20 mg KOH/g, bei dessen Herstellung mindestens eine Verbindung (v) enthaltend zwei funktionelle Gruppen (v.a) sowie einen zwischen den funktionellen Gruppen angeordneten aliphatischen oder araliphatischen Kohlenwasserstoffrest (v.b) mit 12 bis 70 Kohlenstoffatomen eingesetzt wird sowie mindestens ein Polyurethanharz (X), bei dessen Herstellung mindestens eine Verbindung (x.1) enthaltend mindestens eine Carbonsäuregruppe und mindestens eine gegenüber Isocyanatgruppen reaktive Gruppe eingesetzt wird. Die vorliegende Erfindung betrifft auch ein Verfahren zur Herstellung einer Mehrschichtlackierung unter Einsatz des Beschichtungsmittels sowie die so hergestellte Mehrschichtbeschichtung.

## Beschreibung

Die vorliegende Erfindung betrifft ein wässriges Beschichtungsmittel enthaltend ein Mischpolymerisat, ein hydroxyfunktionelles Reaktionsprodukt und ein Polyurethanharz. Die vorliegende Erfindung betrifft auch ein Verfahren zur Herstellung von Mehrschichtlackierungen unter Einsatz des wässrigen Beschichtungsmittels sowie die mit Hilfe des besagten Verfahrens herstellbaren Mehrschichtlackierungen. Zudem betrifft die vorliegende Erfindung die Verwendung des wässrigen Beschichtungsmittels zur Verbesserung der Stabilität von Mehrschichtlackierungen gegen optische Fehlstellen, insbesondere Nadelstiche.

**Stand der Technik** Bekannt ist eine Vielzahl von Verfahren zur Herstellung von farb- und/oder effektgebenden mehrschichtigen Lackierungen. Aus dem Stand der Technik (vergleiche beispielsweise die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) ist beispielsweise das folgende Verfahren bekannt, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird.

Dieses Verfahren wird beispielsweise in großem Umfang sowohl für die Erstlackierung (OEM) von Automobilen sowie der Lackierung von Metall- und Kunststoffanbauteilen eingesetzt. Über die beschriebenen Verfahren lassen sich unterschiedliche Mehrschichtlackierungen herstellen, die zwar unterschiedliche anwendungstechnologische Eigenschaften zu erfüllen wissen, allerdings in einigen Aspekten noch verbesserungswürdig sind. Ein immer wieder auftretendes Problem von Mehrschichtlackierungen in der Automobilindustrie liegt darin, dass zum Teil die gerade bei Automobilien sehr wichtige und einer hohen Qualitätskontrolle unterliegende optische Qualität nicht erreicht wird. Die optische Qualität einer Mehrschichtlackierung richtet sich neben Eigenschaften wie Glanz oder Abbildungsschärfe (DOI) insbesondere nach der Anzahl lokal begrenzter, optischer Fehlstellen. Gerade solche lokal begrenzten, optisch diskret erfassbaren Fehlstellen sind innerhalb einer sonst homogenen Lackoberfläche sehr auffällig und setzen die optische Qualität deutlich herab. Zu nennen sind dabei insbesondere Nadelstiche. Diese entstehen bekanntermaßen insbesondere bei der Herstellung von Mehrschichtlackierungen durch ungewünschte Luft-, Lösemittel- und/oder Feuchtigkeitseinschlüsse im Rahmen der Applikationsprozesse von Beschichtungsmitteln. Diese Einschlüsse können sich in Form von Blasen unterhalb der Oberfläche der Gesamtlackierung bemerkbar machen und können bei der dann folgenden Härtung aufbrechen. Die dabei entstehenden Löcher werden auch Nadelstiche genannt. Je höher die Schichtdicke der Beschichtungsmittel gewählt wird, desto größer ist die Menge an Luft, organischen Lösemitteln und/oder Wasser, die aus den applizierten Schichten entweichen muss. Demzufolge vergrößert sich dabei auch die Tendenz zur Bildung von Nadelstichen. Die Schichtdicke, ab der Nadelstiche auftreten (Nadelstichgrenze), kann demzufolge genauso wie die Anzahl an Nadelstichen bei einer vorgegebenen Schichtdicke als Nachweis für die Stabilität gegen Nadelstiche dienen.

Die Beeinflussung bestimmter anwendungstechnologischer Eigenschaften von Mehrschichtlackierungen kann beispielsweise durch die gezielte Abstimmung und Kombination von speziellen Komponenten wie Bindemitteln oder Additiven in den zur Herstellung der Lackierungen eingesetzten Beschichtungsmitteln erfolgen.

### Aufgabe und technische Lösung

Der vorliegenden Erfindung lag also die Aufgabe zugrunde, die Stabilität von Mehrschichtlackierungen gegen optische Fehlstellen, insbesondere Nadelstiche, zu verbessern. Auf diese Weise sollte es insbesondere möglich sein, die immer weiter wachsenden Anforderungen der Automobilhersteller an die anwendungstechnologischen Eigenschaften von Mehrschichtlackierungen zu erfüllen.

Es wurde gefunden, dass die genannten Aufgaben gelöst werden konnten durch ein wässriges Beschichtungsmittel enthaltend

mindestens eine wässrige Dispersion enthaltend mindestens ein Mischpolymerisat (MP), wobei das Mischpolymerisat (MP) herstellbar ist, durch
(i) Vorlage einer wässrigen Dispersion mindestens eines Polyurethans, und anschließend
(ii) Polymerisation einer Mischung von olefinisch ungesättigten Monomeren in Gegenwart des Polyurethans aus (i),
   wobei
   (a) ein wasserlöslicher Initiator verwendet wird,
   (b) die Zudosierung der olefinisch ungesättigten Monomere so erfolgt, dass in der Reaktionslösung eine Konzentration von 6,0 Gew.-%, bezogen auf die Gesamtmenge an zur Polymerisation eingesetzten olefinisch ungesättigten Monomeren, während der gesamten Reaktionsdauer nicht überschritten wird, und
   (c) die Mischung der olefinisch ungesättigten Monomere mindestens ein mehrfach olefinisch ungesättigtes Monomer enthält,
mindestens ein lineares hydroxyfunktionelles Reaktionsprodukt (R) mit einer Säurezahl kleiner 20 mg KOH/g, bei dessen Herstellung mindestens eine Verbindung (v) enthaltend zwei funktionelle Gruppen (v.a) sowie einen zwischen den funktionellen Gruppen angeordneten aliphatischen oder araliphatischen Kohlenwasserstoffrest (v.b) mit 12 bis 70 Kohlenstoffatomen eingesetzt wird,
sowie
mindestens ein Polyurethanharz (X), bei dessen Herstellung mindestens eine Verbindung (x.1) enthaltend mindestens eine Carbonsäuregruppe und mindestens eine gegenüber Isocyanatgruppen reaktive Gruppe eingesetzt wird.

Das neue wässrige Beschichtungsmittel wird in der Folge auch als erfindungsgemäßes Beschichtungsmittel bezeichnet. Bevorzugte Ausführungsformen des erfindungsgemäßen Beschichtungsmittels gehen aus der folgenden Beschreibung sowie den Unteransprüchen hervor.

Ebenfalls Gegenstand der vorliegenden Erfindung ist ein Verfahren zur Herstellung von Mehrschichtlackierungen unter Einsatz des wässrigen Beschichtungsmittels sowie die mit Hilfe des besagten Verfahrens herstellbaren Mehrschichtlackierungen. Zudem betrifft die vorliegende Erfindung die Verwendung des wässrigen Beschichtungsmittels zur Verbesserung der Stabilität von Mehrschichtlackierungen gegen optische Fehlstellen, insbesondere Nadelstiche.

Es hat sich gezeigt, dass durch den Einsatz des erfindungsgemäßen Beschichtungsmittels zur Herstellung von Lackierungen, insbesondere Mehrschichtlackierungen, die Stabilität dieser Lackierungen gegen optische Fehlstellen deutlich verbessert werden kann. Durch den Einsatz des wässrigen Beschichtungsmittels als Basislack wird in der resultierenden Mehrschichtlackierung insbesondere eine hervorragende Stabilität gegen Nadelstiche erzielt.

### Ausführliche Beschreibung

### Das erfindungsgemäße Beschichtungsmittel

Das erfindungsgemäße Beschichtungsmittel enthält eine spezielle wässrige Dispersion umfassend mindestens ein spezielles Mischpolymerisat (MP), bevorzugt genau ein Mischpolymerisat (MP).

Ein Mischpolymerisat im Sinne der vorliegenden Erfindung bezeichnet Polymerisate, die aus verschiedenen Polymerarten, beispielsweise einem Polyurethan und einem (Meth)acrylatpolymerisat aufgebaut sind. Es sind dabei ausdrücklich sowohl Polymerisate eingeschlossen, welche kovalent aneinander gebunden sind, als auch solche, bei denen die verschiedenen Polymere durch Adhäsion aneinander gebunden sind. Auch Kombinationen von beiden Arten der Bindung sind von dieser Definition erfasst. Über die Bezeichnung "(Meth)Acrylat" sind Acrylate, Methacrylate sowie Mischungen hiervon erfasst. Die Begriffe Polymer und Polymerisat sind inhaltsgleich und damit austauschbar.

Das Mischpolymerisat (MP) ist herstellbar durch
(i) Vorlage einer wässrigen Dispersion mindestens eines Polyurethans, und anschließend
(ii) Polymerisation einer Mischung von olefinisch ungesättigten Monomeren in Gegenwart des Polyurethans aus (i),
   wobei
   a. ein wasserlöslicher Initiator verwendet wird,
   b. die Zudosierung der olefinisch ungesättigten Monomere so erfolgt, dass in der Reaktionslösung eine Konzentration von 6,0 Gew.-%, bezogen auf die Gesamtmenge an zur Polymerisation eingesetzten olefinisch ungesättigten Monomeren, während der gesamten Reaktionsdauer nicht überschritten wird, und
   c. die Mischung der olefinisch ungesättigten Monomere mindestens ein mehrfach olefinisch ungesättigtes Monomer enthält.

Im ersten Herstellungsschritt wird eine wässrige Dispersion eines Polyurethanharzes vorgelegt.

Geeignete gesättigte oder ungesättigte Polyurethanharze werden beispielsweise beschrieben in
- der deutschen Patentanmeldung DE 199 48 004 A1, Seite 4, Zeile 19 bis Seite 11 Zeile 29 (Polyurethanpräpolymer B1)
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32.

Für die Herstellung des Polyurethanharzes werden zum einen vorzugsweise die dem Fachmann bekannten aliphatischen, cycloaliphatischen, aliphatischcycloaliphatischen, aromatischen, aliphatisch-aromatischen und/oder cycloaliphatisch-aromatischen Polyisocyanate eingesetzt. Besonders bevorzugt sind aliphatische und aliphatisch-cycloaliphatische Polyurethanharze.

Als Alkohol-Komponente für die Herstellung der Polyurethanharze werden bevorzugt die dem Fachmann bekannten, gesättigten und ungesättigten Polyole sowie gegebenenfalls in untergeordneten Mengen auch Monoalkohole eingesetzt. Es werden insbesondere Diole und gegebenenfalls in untergeordneten Mengen Triole zur Einführung von Verzweigungen eingesetzt. Beispiele geeigneter Polyole sind gesättigte oder olefinisch ungesättigte Polyesterpolyole und/oder Polyetherpolyole. Insbesondere werden als Polyole Polyesterpolyole, insbesondere solche mit einem zahlenmittleren Molekulargewicht von 400 bis 5000 g/mol eingesetzt. Das zahlenmittlere Molekulargewicht wird im Rahmen der vorliegenden Erfindung, sofern nicht spezifisch anders angegeben, mittels Dampfdruckosmose bestimmt. Gemessen wurde mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin Benzil als Eichsubstanz eingesetzt wurde).

Bevorzugt handelt es sich bei dem in wässriger Dispersion vorgelegten Polyurethan um ein hydrophil stabilisiertes Polyurethan. Zur hydrophilen Stabilisierung beziehungsweise zur Erhöhung der Dispergierbarkeit in wässrigem Medium kann das Polyurethanharz bestimmte ionische Gruppen und/oder Gruppen, die in ionische Gruppen überführt werden können (potentiell ionische Gruppen), enthalten. Solche Polyurethanharze werden im Rahmen der vorliegenden Erfindung als ionisch hydrophil stabilisierte Polyurethanharze bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um
- funktionelle Gruppen, die durch Neutralisationsmittel und/oder Quaternisierungsmittel in Kationen überführt werden können, und/oder kationische Gruppen (kationische Modifizierung)
   oder
- funktionelle Gruppen, die durch Neutralisationsmittel in Anionen überführt werden können, und/oder anionische Gruppen (anionische Modifizierung)
   oder
- nicht ionische hydrophile Gruppen (nicht-ionische Modifizierung)
   oder
- Kombinationen der zuvor genannten Gruppen.

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die ionischen oder potentiell ionischen Gruppen enthalten, in das Polyurethanharz eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens eine Hydroxygruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Bevorzugt wird mindestens ein organisches Lösemittel zu der vorgelegten Polyurethandispersion gegeben, wobei das organische Lösemittel bevorzugt in jedem Verhältnis mit Wasser und in jedem Verhältnis mit der Mischung von olefinisch ungesättigten Monomeren mischbar ist. Geeignete organische Lösemittel sind N-Methylpyrrolidon, N-Ethylpyrrolidon und Etheralkohole wie insbesondere Methoxypropanol, wobei zu beachten ist, dass sich bereits aus ökologischen Gründen der Verzicht auf pyrrolidonbasierte Lösemittel anbieten kann. Die Menge des organischen Lösemittels wird aber so gewählt, dass der wässrige Charakter der Dispersion erhalten bleibt.

Im zweiten Herstellungsschritt wird eine Polymerisation einer Mischung von olefinisch ungesättigten Monomeren in Gegenwart des Polyurethans nach den Methoden der sogenannten radikalischen Emulsionspolymerisationen in Gegenwart mindestens eines Polymerisationsinitiators durchgeführt.

Bei dem verwendeten Polymerisationsinitiator muss es sich um einen wasserlöslichen Initiator handeln. Beispiele geeigneter Initiatoren sind Kalium-, Natrium- oder Ammoniumperoxodisulfat, sowie Wasserstoffperoxid, tert.-Butylhydroperoxid, 2,2'-Azobis(2-amidoisopropan)dihydrochlorid, 2,2'-Azo- bis-(N,N'-dimethylenisobutyramidin)dihydrochlorid oder 2,2'-Azo- bis-(4-cyano)pentansäure). Die Initiatoren werden entweder allein oder in Mischung verwendet, beispielsweise Mischungen aus Wasserstoffperoxid und Natriumpersulfat.

Auch die bekannten Redox-Initiatorsysteme können als Polymerisationsinitiatoren verwendet werden. Solche Redox-Initiatorsysteme enthalten mindestens eine peroxidhaltige Verbindung in Kombination mit einem Redox-Coinitiator beispielsweise reduzierend wirkenden Schwefelverbindungen, beispielsweise Bisulfite, Sulfite, Thiosulfate, Dithionite oder Tetrathionate von Alkalimetallen und Ammoniumverbindungen, Natriumhydroxymethansulfinat-Dihydrat und/oder Thioharnstoff. So kann man Kombinationen von Peroxodisulfaten mit Alkalimetalloder Ammoniumhydrogensulfiten einsetzen, beispielsweise Ammoniumperoxidisulfat und Ammoniumdisulfit. Das Gewichtsverhältnis von peroxidhaltigen Verbindungen zu den Redox-Coinitiatoren beträgt vorzugsweise 50 : 1 bis 0,05 : 1. In Kombination mit den Initiatoren bzw. den Redoxinitiatorsystemen können zusätzlich Übergangsmetallkatalysatoren eingesetzt werden, wie beispielsweise Eisen-, Nickel-, Kobalt-, Mangan-, Kupfer-, Vanadium, oder Chromsalze, wie Eisen-II-sulfat, Kobalt-II-chlorid, Nickel-II-sulfat, Kupfer-I-chlorid, Mangan-II-acetat, Vanadium-III-acetat, Mangan-II-chlorid. Bezogen auf die Monomere werden diese Übergangsmetallsalze üblicherweise in Mengen von 0,1 bis 1000 ppm eingesetzt. So kann man Kombinationen von Wasserstoffperoxid mit Eisen-II-Salzen einsetzen, wie beispielsweise 0,5 bis 30% Wasserstoffperoxid und 0,1 bis 500 ppm Mohrsches Salz.

Die Initiatoren werden bevorzugt in einer Menge von 0,05 bis 20 Gew.-%, bevorzugt 0,05 bis 10, besonders bevorzugt von 0,1 bis 5 Gew.-% bezogen auf das Gesamtgewicht der zur Polymerisation eingesetzten olefinisch ungesättigten Monomere eingesetzt. Die Begriffe Gesamtmenge und Gesamtgewicht sind gleichbedeutend.

Die Verwendung des wasserlöslichen Initiators bedingt, dass olefinisch ungesättigte Monomere, die zu der vorgelegten wässrigen Dispersion gegeben werden, sofort zu Oligomeren reagieren können. Diese Oligomere haben eine geringere Tendenz in die Polyurethanteilchen der vorgelegten Dispersion einzudringen als die kleineren Monomere.

Die Polymerisation wird zweckmäßigerweise beispielsweise bei einer Temperatur von größer 0 bis 160°C, vorzugsweise 60 bis 95°C durchgeführt.

Dabei wird bevorzugt unter Ausschluss von Sauerstoff gearbeitet, vorzugsweise in einem Stickstoffstrom. In der Regel wird die Polymerisation bei Normaldruck durchgeführt, jedoch ist auch die Anwendung von niedrigeren Drucken oder höheren Drucken möglich, insbesondere wenn Polymerisationstemperaturen angewendet werden, die oberhalb des Siedepunktes der Monomere und/oder der organischen Lösungsmittel liegen.

Die Herstellung der erfindungsgemäß einzusetzenden Mischpolymerisate (MP) erfolgt durch radikalische wäßrige Emulsionspolymerisation, wobei dem Reaktionsmedium Tenside oder Schutzkolloide zugesetzt werden können. Eine Zusammenstellung geeigneter Emulgatoren und Schutzkolloide findet sich beispielsweise in Houben Weyl, Methoden der organischen Chemie, Band XIV/1 Makromolekulare Stoffe, Georg Thieme Verlag, Stuttgart 1961, S411 ff.

Wichtig für die Herstellung der erfindungsgemäß einzusetzenden wässrigen Dispersionen enthaltend das Mischpolymerisat (MP) ist die Kontrolle der Bedingungen der Polymerisationsreaktion der Mischung von olefinisch ungesättigten Monomeren in Gegenwart des Polyurethans. Diese wird so durchgeführt, dass es sich um eine so genannte "verhungernde Polymerisation" (auch als "starve feed", "starve fed" oder "starved feed" Polymerisation bekannt) handelt.

Als verhungernde Polymerisation im Sinne der vorliegenden Erfindung wird eine Emulsionspolymerisation angesehen bei der der Gehalt an Restmonomeren in der Reaktionslösung während der Reaktionsdauer minimiert wird, das heißt die Zudosierung der olefinisch ungesättigten Monomere so erfolgt, dass in der Reaktionslösung eine Konzentration von 6,0 Gew.-%, bevorzugt 5,0 Gew.-%, besonders bevorzugt 4,0 Gew.-%, besonders vorteilhaft 3,5 Gew.-%, jeweils bezogen auf die Gesamtmenge an zur Polymerisation eingesetzten olefinisch ungesättigten Monomeren, während der gesamten Reaktionsdauer nicht überschritten wird. Darunter nochmals bevorzugt sind Konzentrationsbereiche der olefinisch ungesättigten Monomere von 0,01 bis 6,0 Gew.-%, bevorzugt 0,02 bis 5,0 Gew.-%, besonders bevorzugt 0,03 bis 4,0 Gew.-%, insbesondere 0,05 bis 3,5 Gew.-%, jeweils bezogen auf die Gesamtmenge an zur Polymerisation eingesetzten olefinisch ungesättigten Monomeren. Beispielsweise kann der höchste während der Reaktion zu detektierende Anteil (beziehungsweise die Konzentration) bei 0,5 Gew.-%, 1,0 Gew.-%, 1,5 Gew.-%, 2,0 Gew.-%, 2,5 Gew.-% oder 3,0 Gew.-% liegen, während alle weiteren detektierten Werte dann unterhalb der hier angegebenen Werte liegen. Der Begriff Konzentration ist in diesem Zusammenhang also offensichtlich gleichbedeutend mit dem Begriff Anteil.

Die Konzentration der Monomere in der Reaktionslösung, im Folgenden als freie Monomere bezeichnet, kann auf verschiedene Art und Weisen gesteuert werden.

Eine Möglichkeit die Konzentration der freien Monomere gering zu halten ist es, die Dosiergeschwindigkeit der Mischung der olefinisch ungesättigten Monomere sehr niedrig zu wählen. Wenn die Zudosiergeschwindigkeit so niedrig ist, dass alle Monomere möglichst schnell reagieren können sobald sie in der Reaktionslösung sind, kann sichergestellt werden, dass die Konzentration der freien Monomere minimiert wird.

Neben der Dosiergeschwindigkeit ist es wichtig, dass immer ausreichend Radikale in der Reaktionslösung vorhanden sind, so dass die zudosierten Monomere jeweils möglichst schnell zur Reaktion gebracht werden können. Dazu sind die Reaktionsbedingungen bevorzugt so zu wählen, dass mit dem Initiatorzulauf schon vor Beginn der Dosierung der olefinisch ungesättigten Monomeren begonnen wird. Bevorzugt wird mit der Dosierung mindestens 5 Minuten vorher begonnen, besonders bevorzugt mindestens 10 Minuten vorher. Bevorzugt wird mindestens 10 Gew.-% des Initiators, besonders bevorzugt mindestens 20 Gew.-%, ganz besonders bevorzugt mindestens 30 Gew.-% des Initiators, jeweils bezogen auf die Gesamtmenge an Initiator, vor Beginn der Dosierung der olefinisch ungesättigten Monomeren zugegeben.

Die Initiatormenge ist ein wichtiger Faktor für das ausreichende Vorhandensein von Radikalen in der Reaktionslösung. Die Menge an Initiator ist so zu wählen, dass zu jeder Zeit ausreichend Radikale zur Verfügung stehen, so dass die zudosierten Monomere reagieren können. Wird die Menge an Initiator erhöht, können auch größere Mengen an Monomeren zur gleichen Zeit zur Reaktion gebracht werden.

Ein weiterer Faktor, der die Reaktionsgeschwindigkeit bestimmen kann, ist der Aufbau der Monomere, das heißt insbesondere deren strukturelle Eigenschaften und die sich daraus ableitende Reaktivität.

Die Kontrolle der Konzentration der freien Monomere kann also durch das Zusammenspiel von Initiatormenge, Geschwindigkeit der Initiatorzugabe, Geschwindigkeit der Monomerenzugabe und durch die Auswahl der Monomere gesteuert werden. Sowohl die Verlangsamung der Dosierung, als auch die Erhöhung der Initiatormenge, sowie der frühzeitige Beginn mit der Zugabe des Initiators dienen insbesondere dem Ziel die Konzentration der freien Monomere unter den oben genannten Grenzen zu halten.

Die Konzentration der Monomere in der Reaktionslösung kann dabei zu jedem Zeitpunkt der Reaktion gaschromatographisch bestimmt werden. Typische Parameter für die gaschromatographische Bestimmung sind die folgenden: 50m Silica-Kapillarsäule mit Polyethylenglykol-Phase oder 50m Silica-Kapillarsäule mit Polydimethylsiloxan-Phase, Trägergas Helium, Splitinjektor 150°C, Ofentemperatur 40 bis 220°C, Flammionisationsdetektor, Detektortemperatur 275°C, interner Standard Isobutylacrylat. Die Bestimmung der Konzentration der Monomere erfolgt im Rahmen der vorliegenden Erfindung bevorzugt gaschromatograhisch, insbesondere unter Einhaltung der oben genannten Parameter.

Sollte bei dieser Analyse eine Konzentration an freien Monomeren bestimmt werden, die nah an den Grenzwert für die verhungernde Polymerisation kommt, beispielsweise aufgrund eines hohen Anteils olefinisch ungesättigter Monomere, die eine geringe Reaktivität besitzen, können die oben genannten Parameter zur Steuerung der Reaktion genutzt werden. Es kann in diesem Fall beispielsweise die Dosiergeschwindigkeit der Monomere verringert und/oder die Menge an Initiator erhöht werden.

Geeignete olefinisch ungesättigte Monomere können einfach oder mehrfach olefinisch ungesättigt sein. Bevorzugt sind mindestens ein einfach olefinisch ungesättigtes und mindestens ein mehrfach olefinisch ungesättigtes Monomer enthalten.

Beispiele geeigneter einfach olefinisch ungesättigter Monomere umfassen vinylische einfach olefinisch ungesättigte Monomere wie insbesondere (meth)acrylat-basierte einfach olefinisch ungesättigte Monomere und Allylverbindungen. Beispiele sind auch alpha-beta ungesättigte Carbonsäuren. Bevorzugt werden jedenfalls, aber nicht zwingend ausschließlich, (meth)acrylat-basierte einfach olefinisch ungesättigte Monomere eingesetzt.

Bei den (meth)acrylat-basierten, einfach olefinisch ungesättigten Monomeren kann es sich beispielsweise um (Meth)acrylsäure und Ester, Nitrile, oder Amide der (Meth)acrylsäure handeln.

Bevorzugt sind Ester der (Meth)acrylsäure, mit einem Rest R, der nicht olefinisch ungesättigt ist.

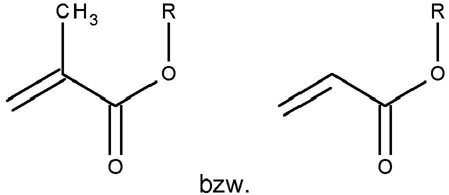

Der Rest R kann aliphatisch oder aromatisch sein. Bevorzugt ist der Rest R aliphatisch.

Der Rest R kann beispielsweise ein Alkylrest sein, oder Heteroatome enthalten. Beispiele für Reste R, die Heteroatome enthalten sind Ether. Bevorzugt werden jedenfalls, aber nicht zwingend ausschließlich, Monomere eingesetzt, bei denen der Rest R ein Alkylrest ist.

Für den Fall, dass R ein Alkylrest ist, kann es sich beispielsweise um einen linearen, verzweigten oder cyclischen Alkylrest handeln. In allen drei Fällen kann es sich um unsubstituierte oder um mit funktionellen Gruppen substituierte Alkylreste handeln. Bevorzugt hat der Alkylrest 1 bis 20, besonders bevorzugt 1 bis 10 Kohlenstoffatome.

Besonders bevorzugte einfach ungesättigte Ester der (Meth)acrylsäure mit einem unsubstituierten Alkylrest sind Methyl(meth)acrylat, Ethyl(meth)acrylat, Propyl(meth)acrylat, Isopropyl(meth)acrylat, n-Butyl(meth)acrylat, Isobutyl(meth)-acrylat, tert-Butyl(meth)acrylat, Amyl(meth)acrylat, Hexyl(meth)acrylat, Ethyl-hexyl(meth)acrylat, 3,3,5-Trimethylhexyl(meth)acrylat, Stearyl(meth)acrylat, Lauryl(meth)acrylat, Cycloalkyl(meth)acrylate, wie Cyclopentyl(meth)acrylat, Isobornyl(meth)acrylat sowie Cyclohexyl(meth)acrylat wobei n- und tert-Butyl(meth)acrylat und Methylmethacrylat ganz besonders bevorzugt sind.

Geeignete einfach ungesättigte Ester der (Meth)acrylsäure mit einem substituierten Alkylrest können bevorzugt mit einer oder mehreren Hydroxylgruppen substitutiert sein.

Besonders bevorzugte einfach ungesättigte Ester der (Meth)acrylsäure mit einem mit einer oder mehreren Hydroxylgruppen substituierten Alkylrest sind 2-Hydroxyethyl(meth)acrylat, 2-Hydroxypropyl(meth)acrylat, 3- Hydroxypropyl (meth)acrylat, 3-Hydroxybutyl(meth)acrylat sowie 4-Hydroxybutyl(meth)acrylat.

Bei möglichen weiteren vinylischen einfach ungesättigten Monomeren handelt es sich um Monomere mit einem Rest R' an der Vinylgruppe, der nicht olefinisch ungesättigt ist.

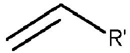

Der Rest R' kann aliphatisch oder aromatisch sein, wobei aromatische Reste bevorzugt sind.

Der Rest R' kann ein Kohlenwasserstoffrest sein, oder Heteroatome enthalten. Beispiele für Reste R', die Heteroatome enthalten sind Ether, Ester, Amide, Nitrile und Heterocylen. Bevorzugt handelt es sich beim Rest R' um einen Kohlenwasserstoffrest. Für den Fall, dass es sich bei R' um einen Kohlenwasserstoffrest handelt, kann dieser mit Heteroatomen substituiert oder unsubstituiert sein, wobei unsubstituierte Reste bevorzugt sind. Bevorzugt ist der Rest R' ein aromatischer Kohlenwasserstoffrest.

Besonders bevorzugte weitere vinylische olefinisch ungesättigte Monomere sind vinylaromatische Kohlenwasserstoffe, insbesondere Vinyltoluol, alpha-Methylstyrol und insbesondere Styrol.

Weitere bevorzugte Monomere, die Heteroatome enthalten, sind olefinisch ungesättigte Monomere wie Acrylnitril, Methacrylnitril, Acrylamid, Methacrylamid, N-Dimethylacrylamid, Vinylacetat, Vinylpropionat, Vinylchlorid, N-Vinylpyrrolidon, N-Vinylcaprolactam, N-Vinylformamid, N-Vinylimidazol und N-Vinyl-2-Methylimidazolin.

Beispiele geeigneter mehrfach olefinisch ungesättigter Monomere umfassen Ester der (Meth)acrylsäure mit einem olefinisch ungesättigten Rest R" und Allylether von mehrwertigen Alkoholen.

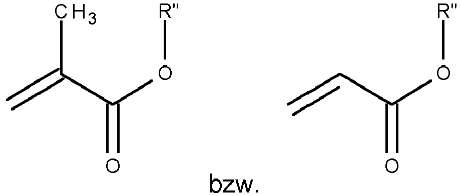

Bei dem Rest R" kann es sich beispielsweise um einen Allylrest oder um einen (Meth)acrylsäureesterrest handeln.

Bevorzugte mehrfach olefinisch ungesättigte Monomere sind Ethylenglykoldi(meth)acrylat, 1,2-Propylenglykoldi(meth)acrylat, 2,2-Propylen-glykoldi(meth)acrylat, Butandiol-1,4-di(meth)acrylat, Neopentylglykoldi(meth)acrylat, 3-Methylpentandioldi(meth)acrylat, Diethylenglykoldi(meth)acrylat, Triethylenglykol-di(meth)acrylat, Tetraethylenglykoldi(meth)acrylat, Dipropylenglykoldi(meth)acrylat, Tripropylenglykoldi(meth)acrylat, Hexandioldi(meth)acrylat und Allyl(meth)acrylat.

Bevorzugte mehrfach olefinisch ungesättigte Verbindungen sind auch Acrylsäureund Methacrylsäureester von Alkoholen mit mehr als zwei OH-Gruppen, wie zum Beispiel Trimethylolpropantri(meth)acrylat oder Glycerintri(meth)acrylat, aber auch Trimethylolpropandi(meth)acrylatmonoallylether, Trimethylolpropan(meth)acrylatdiallylether, Pentaerythrittri(meth)acrylatmonoallylether, Pentaerythritdi(meth)acrylatdiallylether, Pentaerythrit(meth)acrylattriallylether, Triallylsaccharose, und Pentaallylsaccharose.

Besonders bevorzugt wird Allylmethacrylat als mehrfach olefinisch ungesättigtes Monomer eingesetzt.

Die Mischung der olefinisch ungesättigten Monomere enthält mindestens ein mehrfach olefinisch ungesättigtes Monomer. Bevorzugt enthält die Mischung der olefinisch ungesättigten Monomere außerdem ein oder mehrere einfach ungesättigte Ester der (Meth)acrylsäure mit einem unsubstituierten Alkylrest.

Bevorzugt enthält die Mischung der olefinisch ungesättigten Monomere 0,1 bis 6,0 mol-%, besonders bevorzugt 0,1 bis 2,0 mol-%, ganz besonders bevorzugt 0,1 bis 1,0 mol-% mehrfach olefinisch ungesättigte Monomere. Bevorzugt ist der Rest der olefinisch ungesättigten Monomere einfach ungesättigt.

Bevorzugt enthält die Mischung der olefinisch ungesättigten Monomere 0,1 bis 6,0 mol-%, besonders bevorzugt 0,1 bis 2,0 mol-%, ganz besonders bevorzugt 0,1 bis 2,0 mol-% Allylmethacrylat. Besonders bevorzugt sind außer Allylmethacrylat keine weiteren mehrfach olefinisch ungesättigten Monomere in der Mischung enthalten.

Bevorzugt enthält die Mischung von olefinisch ungesättigten Monomeren weniger als 10,0 Gew.-%, besonders bevorzugt weniger als 5,0 Gew.-% vinylaromatische Kohlenwasserstoffe, bezogen auf die Gesamtmenge an bei der Polymerisation eingesetzten olefinisch ungesättigten Monomeren. Ganz besonders bevorzugt sind keine vinylaromatischen Kohlenwasserstoffe in der Mischung der olefinisch ungesättigten Monomere enthalten. Besonders bevorzugt ist es, wenn weniger als 10,0 Gew.-%, besonders bevorzugt weniger als 5,0 Gew.-%, bezogen auf die Gesamtmenge an bei der Polymerisation eingesetzten olefinisch ungesättigten Monomeren, von olefinisch ungesättigten Monomeren mit aromatischen Gruppen eingesetzt werden. Insbesondere sind keine olefinisch ungesättigten Monomere mit aromatischen Gruppen in der Mischung der olefinisch ungesättigten Monomere enthalten.

Daraus folgt, dass die oben als bevorzugt angegebenen vinylaromatische Kohlenwasserstoffe, insbesondere Vinyltoluol, alpha-Methylstyrol und Styrol, natürlich nur innerhalb der Gruppe der Monomere enthaltend aromatische Gruppen bevorzugt sind. Trotzdem gilt im Sinne der Erfindung, dass diese Monomere bevorzugt nicht eingesetzt werden. Sollte sich dann im Einzelfall der Einsatz solcher Monomere trotzdem anbieten, werden bevorzugt die als bevorzugt gekennzeichneten Monomere enthaltend aromatische Gruppen eingesetzt.

In einer bevorzugten Ausführungsform enthält die Mischung von olefinisch ungesättigten Monomeren:
- 98,0 bis 99,5 Gew.-% von einem oder mehreren einfach ungesättigten Estern der (Meth)acrylsäure mit unsubstituierten Alkylresten, wobei die Alkylreste bevorzugt 1 bis 10 Kohlenstoffatomen haben, und
- 0,5 bis 2,0 Gew.-% von einem oder mehreren mehrfach ungesättigten Estern der (Meth)acrylsäure,
jeweils bezogen auf die Gesamtmenge an bei der Polymerisation eingesetzten olefinisch ungesättigten Monomeren.

Bevorzugt wird der Mischung von olefinisch ungesättigten Monomeren mindestens ein Lösemittel zugesetzt, wobei das Lösemittel bevorzugt in jedem Verhältnis mit Wasser und in jedem Verhältnis mit der Mischung von olefinisch ungesättigten Monomeren mischbar ist. Geeignete organische Lösemittel sind N-Methylpyrrolidon, N-Ethylpyrrolidon und Etheralkohole wie insbesondere Methoxypropanol, wobei zu beachten ist, dass sich bereits aus ökologischen Gründen der Verzicht auf pyrrolidonbasierte Lösemittel anbieten kann. Die Menge des organischen Lösemittels wird aber so gewählt, dass der wässrige Charakter der letztlich erhaltenen Dispersion erhalten bleibt.

Durch den beschriebenen Herstellungsprozess haben die Mischpolymerisate in der erfindungsgemäßen wässrigen Dispersion insbesondere einen Kern-Schale-Aufbau, der durch den angegebenen Herstellungsprozess erreicht werden kann. Der Kern-Schale Aufbau ist dabei charakterisiert durch einen Kern, enthaltend mindestens ein Polyurethan, und eine Schale, enthaltend mindestens Polymer welches durch Polymerisation von olefinisch ungesättigten Monomeren erhalten wurde.

Der beschriebene Kern-Schale-Aufbau wird durch die speziellen Reaktionsbedingungen der verhungernden Polymerisation erreicht. Es sind während der gesamten Reaktionsdauer nie größere Mengen an olefinisch ungesättigten Monomeren in Gegenwart des vorgelegten Polyurethans vorhanden, welche in das Polyurethanteilchen eindringen könnten. Durch die während der Monomerzugabe in der wässrigen Phase immer vorhandenen Radikale, die der wasserlösliche Initiator bereitstellt, werden bei Zugabe sofort Oligomere gebildet, die nicht mehr in das Polyurethan eindringen können. Diese polymerisieren sodann auf der Oberfläche des Polyurethans.

In einer bevorzugten Ausführungsform beträgt das Gewichtsverhältnis von Kern zu Schale 80:20 bis 20:80, besonders bevorzugt 60:40 bis 40:60. Gemeint ist hierbei das Verhältnis der Mengen an zur Herstellung von Kern (Schritt (i), Polyurethan) und Schale (Schritt (ii), Mischung von olefinisch ungesättigten Monomeren) eingesetzten Komponenten.

Bevorzugt haben die Mischpolymerisate (MP) in der wässrigen Dispersion eine Teilchengröße (z-Mittel) von 60 bis 130, besonders bevorzugt von 70 bis 115 nm, gemessen mittels Photonkorrelationsspektroskopie mit einem Malvern Nano S90 (Fa. Malvern Instruments) bei 25 ± 1 °C. Das Gerät, ausgestattet mit einem 4mW He-Ne Laser bei einer Wellenlänge von 633nm, deckt einen Größenbereich von 1 bis 3000 nm ab.

Die Mischpolymerisate (MP) können bevorzugt vernetzt sein. Der Gelanteil der erfindungsgemäßen wässrigen Dispersion beträgt bevorzugt 40 bis 97 Gew.-%, besonders bevorzugt 75 bis 90 Gew.-%, jeweils bezogen auf den Festkörper der Dispersion.

Der Gelanteil kann gravimetrisch bestimmt werden, indem die Dispersion gefriergetrocknet wird, die Gesamtmasse des gefriergetrockneten Polymers bestimmt wird (entspricht im Rahmen der Bestimmung des Gelanteils dem Festkörper der Dispersion) und das Polymer anschließend 24 Stunden bei 25°C in einem Überschuss an Tetrahydrofuran (Verhältnis Tetrahydrofuran zu gefriergetrocknetem Polymer = 300 : 1) extrahiert wird. Der unlösliche Anteil wird abgetrennt und bei 50°C vier Stunden lang im Umluftofen getrocknet. Im Anschluss wird der getrocknete, unlösliche Anteil gewogen und der Quotient mit der Gesamtmasse des gefriergetrockneten Polymers gebildet. Der erhaltene Wert entspricht dem Gelanteil.

Die gewichtsmittlere Molmasse der Mischpolymerisate (MP) beträgt bevorzugt 3*10⁷ g/mol bis 8,5*10⁹ g/mol, wobei die gewichtsmittlere Molmasse mit Kleinwinkel-Laserlichtstreuung ermittelt werden kann.

Die Säurezahl der Mischpolymerisate (MP) beträgt bevorzugt 0 bis 220 mg KOH/g Festharz, bevorzugt 0 bis 40 mg KOH / g Festharz, besonders bevorzugt 0 bis 25 mg KOH/g Festharz. Die OH-Zahl ist bevorzugt kleiner 70, bevorzugt kleiner 20 mg KOH/g Festharz. Die Begriffe Festharz und Festkörper in Bezug auf ein Polymer beziehungsweise eine Dispersion eines Polymers sind bedeutungsgleich. Es handelt sich also insbesondere um den wie weiter unten erläuterten Festkörper beziehungsweise Festkörpergehalt einer Polymerdispersion.

Die Säurezahl kann beispielsweise in Anlehnung an die DIN EN ISO 2114 in homogener Lösung aus THF / Wasser (9 Vol.-Teile THF und 1 Vol.-Teil destilliertes Wasser) mit ethanolischer Kaliumhydroxid-Lösung bestimmt werden.

Die OH-Zahl kann in Anlehnung an R.-P. Krüger, R. Gnauck und R. Algeier, Plaste und Kautschuk, 20, 274 (1982), mittels Essigsäureanhydrid in Gegenwart von 4-Dimethylaminopyridin als Katalysator in einer Tetrahydrofuran (THF) / Dimethylformamid (DMF)-Lösung bei Raumtemperatur ermittelt werden, wobei der verbliebene Überschuss an Essigsäureanhydrid nach Acetylierung vollständig hydrolysiert wird und die Essigsäure mit alkoholischer Kaliumhydroxid-Lösung potentiometrisch zurücktitriert wird.

Die wässrigen Dispersionen des mindestens einen Mischpolymerisats (MP) weisen bevorzugt einen Festkörpergehalt von 15 bis 45 Gew.-%, insbesondere bevorzugt 25 bis 35 Gew.-% auf. Solche Festkörpergehalte können problemlos durch den Einsatz entsprechender Mengen von organischen Lösungsmitteln und insbesondere Wasser bei der Herstellung der Mischpolymerisate und/oder durch entsprechende Verdünnung nach der Herstellung eingestellt werden.

Der Anteil der Mischpolymerisate (MP) liegt vorzugsweise im Bereich von 0,5 bis 15 Gew.-%, bevorzugt 0,75 bis 12,5 Gew.-%, besonders bevorzugt 1,0 bis 10 Gew.-%, insbesondere 1,5 bis 7,5 Gew.-%, jeweils bezogen auf das Gesamtgewicht des erfindungsgemäßen Beschichtungsmittels.

Das erfindungsgemäße Beschichtungsmittel enthält zudem mindestens ein spezielles Reaktionsprodukt (R), bevorzugt genau ein Reaktionsprodukt (R).

Die Reaktionsprodukte sind linear. Lineare Reaktionsprodukte können grundsätzlich durch die Umsetzung von difunktionellen Reaktanten erhalten werden, wobei dann durch die Verknüpfung der Reaktanten über Reaktion der funktionellen Gruppen eine lineare, das heißt kettenartige Struktur entsteht. Beispielsweise gilt damit für den Fall, dass das Reaktionsprodukt ein Polymer ist, dass das Rückgrat einen linearen Charakter hat. Handelt es sich bei dem Reaktionsprodukt beispielsweise um einen Polyester, können als Reaktanten Diole und Dicarbonsäuren eingesetzt werden, wobei dann in dem Reaktionsprodukt die Abfolge von Esterbindungen linearen Charakter hat. Bevorzugt werden bei der Herstellung des Reaktionsproduktes (R) also hauptsächlich difunktionelle Reaktanten eingesetzt. Andere Reaktanten wie insbesondere monofunktionelle Verbindungen werden demnach bevorzugt nicht oder nur in untergeordneten Mengen eingesetzt. Insbesondere werden mindestens 80 mol-%, bevorzugt mindestens 90 mol-%, ganz besonders bevorzugt ausschließlich difunktionelle Reaktanten eingesetzt. Sofern andere Reaktanten eingesetzt werden, werden diese bevorzugt ausschließlich aus der Gruppe der monofunktionellen Reaktanten ausgewählt. Bevorzugt ist aber, dass ausschließlich difunktionelle Reaktanten eingesetzt werden.

Als funktionelle Gruppen der Reaktanten kommen die dem Fachmann in diesem Zusammenhang bekannten funktionellen Gruppen in Betracht. Auch die Kombinationen von Reaktanten mit entsprechenden funktionellen Gruppen, die miteinander verknüpft werden können und damit zur Herstellung des Reaktionsproduktes dienen können, sind grundsätzlich bekannt. Selbiges gilt für die zur Verknüpfung notwendigen Reaktionsbedingungen. Bevorzugte funktionelle Gruppen der Reaktanten sind Hydroxyl-, Carboxyl-, Imino-, Carbamat-, Allophanat, Thio-, Anhydrid-, Epoxy-, Isocyanat-, Methylol-, Methylolether-, Siloxan, und/oder Aminogruppen, insbesondere bevorzugt Hydroxyl- und Carboxylgruppen. Bevorzugte Kombinationen von funktionellen Gruppen, die miteinander verknüpft werden können, sind Hydroxyl- und Carboxylgruppen, Isocyanat- und Hydroxylgruppen, Isocyanat- und Aminogruppen, Epoxy- und Carboxylgruppen und/oder Epoxy- und Aminogruppen, wobei bei der Wahl der funktionellen Gruppen darauf zu achten ist, dass die weiter unten beschriebene Hydroxyfunktionalität und Säurezahl des Reaktionsprodukts erhalten wird. Bei der Verknüpfung entstehen dann die dem Fachmann bekannten Verknüpfungsstellen, beispielsweise Estergruppen, Urethangruppen und/oder Harnstoffgruppen. Ganz besonders bevorzugt ist eine Kombination von Hydroxyl- und Carboxylgruppen. In dieser Ausführungsform weißt also mindestens ein Reaktant Hydroxylgruppen auf und mindestens ein weiterer Reaktant Carboxylgruppen auf. Bevorzugt wird eine Kombination aus dihydroxyfunktionellen und dicarboxyfunktionellen Reaktanten eingesetzt. Durch an sich bekannte Reaktionsführung entstehen bei der Umsetzung dieser Reaktanten Reaktionsprodukte enthaltend Esterbindungen.

Das Reaktionsprodukt ist hydroxyfunktionell. Bevorzugt ist, dass die Reaktanten so umgesetzt werden, dass dabei entstehende lineare Moleküle zwei endständige Hydroxylgruppen aufweisen. Das heißt, dass an den beiden Enden dieser Moleküle jeweils eine Hydroxylgruppe vorhanden ist.

Das Reaktionsprodukt hat eine Säurezahl von kleiner 20, bevorzugt kleiner 15, insbesondere bevorzugt kleiner 10 und ganz besonders bevorzugt kleiner 5 mg KOH/g. Es weist also bevorzugt eine nur sehr geringe Menge an Carbonsäuregruppen auf. Die Säurezahl wird im Rahmen der vorliegenden Erfindung, sofern nicht explizit anders angegeben, gemäß DIN 53402 bestimmt. Sie bezieht sich also auf das Reaktionsprodukt an sich, das heißt auf den Festkörper (zur Bestimmung der Festkörpers siehe unten).

Wird im Rahmen der vorliegenden Erfindung auf eine offizielle Norm ohne Hinweis auf den offiziellen Gültigkeitszeitraum verwiesen, ist hiermit selbstverständlich die zum Anmeldetag geltende Fassung der Norm oder, falls zu diesem Zeitpunkt keine geltende Fassung besteht, die letzte geltende Fassung gemeint.

Die beschriebene Hydroxyfunktionalität lässt sich genauso wie die geringe Säurezahl beispielsweise in an sich bekannter Weise durch den Einsatz entsprechender Verhältnisse von Reaktanten mit entsprechenden funktionellen Gruppen erhalten. In dem bevorzugten Fall, dass bei der Herstellung dihydroxyfunktionelle und dicarboxyfunktionelle Reaktanten eingesetzt werden, wird also ein entsprechender Überschuss der dihydroxyfunktionellen Komponente eingesetzt. In diesem Zusammenhang sei noch folgendes erläutert. Schon aus rein statistischen Gründen werden bei einer realen Umsetzung selbstverständlich nicht nur Moleküle erhalten, die beispielsweise die gewünschte (Di)-Hydroxyfunktionalität aufweisen. Durch die Wahl entsprechender Bedingungen, beispielsweise eines Überschusses an dihydroxyfunktionellen Reaktanten, und Führung der Reaktion bis zum Erhalt der gewünschten Säurezahl, ist aber garantiert, dass die das Reaktionsprodukt ausmachenden Umsetzungsprodukte beziehungsweise Moleküle im Mittel jedenfalls hydroxyfunktionell sind. Der Fachmann weiß entsprechende Bedingungen zu wählen.

Bei der Herstellung des Reaktionsproduktes wird mindestens eine Verbindung (v) als Reaktant eingesetzt beziehungsweise umgesetzt, welche zwei funktionelle Gruppen (v.a) sowie einen zwischen den beiden funktionellen Gruppen angeordneten aliphatischen oder araliphatischen Kohlenwasserstoffrest (v.b) mit 12 bis 70, bevorzugt 22 bis 55, besonders bevorzugt 30 bis 40 Kohlenstoffatomen aufweist. Die Verbindungen (v) bestehen also aus zwei funktionellen Gruppen und dem Kohlenwasserstoffrest. Als funktionelle Gruppen kommen selbstverständlich die oben beschriebenen funktionellen Gruppen in Frage, insbesondere Hydroxyl- und Carboxylgruppen. Aliphatische Kohlenwasserstoffreste sind bekanntermaßen acyclische oder cyclische, gesättigte oder ungesättigte Kohlenstoffwasserstoffreste, die nicht aromatisch sind. Araliphatische Kohlenwasserstoffreste sind solche, die sowohl aliphatische als auch aromatische Struktureinheiten enthalten.

Das zahlenmittlere Molekulargewicht der Reaktionsprodukte kann breit variieren und liegt bevorzugt von 600 bis 40.000 g/mol, insbesondere von 800 bis 10.000 g/mol, ganz besonders bevorzugt von 1200 bis 5000 g/mol. Das zahlenmittlere Molekulargewicht wird im Rahmen der vorliegenden Erfindung, sofern nicht explizit anders angegeben, mittels Dampfdruckosmose bestimmt. Gemessen wurde mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin Benzil als Eichsubstanz eingesetzt wurde).

Bevorzugte Verbindungen (v) sind Dimerfettsäuren beziehungsweise sind in Dimerfettsäuren enthalten. Bei der Herstellung der Reaktionsprodukte (R) werden also bevorzugt, aber nicht zwingend ausschließlich, Dimerfettsäuren als Verbindung (v) eingesetzt. Als Dimerfettsäuren (seit langem auch bekannt als dimerisierte Fettsäuren oder Dimersäuren) werden allgemein und insbesondere im Rahmen der vorliegenden Erfindung Gemische bezeichnet, die durch Oligomerisierung von ungesättigten Fettsäuren hergestellt werden. Sie sind beispielsweise herstellbar durch katalytische Dimerisierung von pflanzlichen, ungesättigten Fettsäuren, wobei als Ausgangsstoffe insbesondere ungesättigte C₁₂- bis C₂₂-Fettsäuren eingesetzt werden. Die Verknüpfung verläuft vornehmlich nach dem Diels-Alder-Typ und es resultieren, je nach Zahl und Lage der Doppelbindungen der zur Herstellung der Dimerfettsäuren eingesetzten Fettsäuren, Gemische aus vornehmlich dimeren Produkten, die zwischen den Carboxylgruppen cycloaliphatische, linear-aliphatische, verzweigt aliphatische und auch C₆-aromatische Kohlenwasserstoffgruppen aufweisen. Je nach Mechanismus und/oder gegebenenfalls nachträglicher Hydrierung können die aliphatischen Reste gesättigt oder ungesättigt sein und auch der Anteil von aromatischen Gruppen kann variieren. Die Reste zwischen den Carbonsäuregruppen enthalten dann beispielsweise 24 bis 44 Kohlenstoffatome. Bevorzugt werden zur Herstellung Fettsäuren mit 18 Kohlenstoffatomen eingesetzt, sodass das dimere Produkt also 36 Kohlenstoffatome aufweist. Vorzugsweise weisen die Reste, welche die Carboxylgruppen der Dimerfettsäuren verbinden, keine ungesättigten Bindungen und keine aromatischen Kohlenwasserstoffreste auf.

Im Sinne der vorliegenden Erfindung werden bei der Herstellung also bevorzugt C₁₈-Fettsäuren eingesetzt. Besonders bevorzugt werden Linolen-, Linol- und/oder Ölsäure eingesetzt.

In Abhängigkeit von der Reaktionsführung entstehen bei der oben bezeichneten Oligomerisierung Gemische, die hauptsächlich dimere, aber auch trimere Moleküle sowie monomere Moleküle und sonstige Nebenprodukte enthält. Üblicherweise wird destillativ gereinigt. Handelsübliche Dimerfettsäuren enthalten im Allgemeinen mindestens 80 Gew.-% dimere Moleküle, bis zu 19 Gew.-% trimere Moleküle und maximal 1 Gew.-% monomerer Moleküle und sonstiger Nebenprodukte.

Es ist bevorzugt, Dimerfettsäuren einzusetzen, die zu mindestens 90 Gew.-%, bevorzugt zu mindestens 95 Gew.-%, ganz besonders bevorzugt zu mindestens 98 Gew.-% aus dimeren Fettsäuremolekülen bestehen.

Im Sinne der vorliegenden Erfindung ist es bevorzugt, Dimerfettsäuren einzusetzen, die zu mindestens 90 Gew.-% aus dimeren Molekülen, weniger als 5 Gew.-% aus trimeren Molekülen und zu weniger als 5 Gew.-% aus monomeren Molekülen und sonstigen Nebenprodukten bestehen. Es ist besonders bevorzugt, Dimerfettsäuren einzusetzen, die zu 95 bis 98 Gew.-% aus dimeren Molekülen, weniger als 5 Gew.-% aus trimeren Molekülen und zu weniger als 1 Gew.-% aus monomeren Molekülen und sonstigen Nebenprodukten bestehen. Ebenfalls besonders bevorzugt werden Dimerfettsäuren eingesetzt, die zu mindestens 98 Gew.-% aus dimeren Molekülen, weniger als 1,5 Gew.-% aus trimeren Molekülen und zu weniger als 0,5 Gew.-% aus monomeren Molekülen und sonstigen Nebenprodukten bestehen. Die Bestimmung der Anteile von monomeren, dimeren und trimeren Molekülen sowie sonstigen Nebenprodukten in den Dimerfettsäuren kann beispielsweise mittels Gaschromatografie (GC) erfolgen. Dabei werden die Dimerfettsäuren vor der GC-Analyse über die Bortrifluorid-Methode zu den entsprechenden Methylestern umgesetzt (vergleiche DIN EN ISO 5509) und dann mittels GC analysiert.

Als grundlegendes Kennzeichen für "Dimerfettsäuren" gilt im Rahmen der vorliegenden Erfindung also, dass deren Herstellung die Oligomerisierung von ungesättigten Fettsäuren umfasst. Bei dieser Oligomerisierung entstehen vornehmlich, das heißt bevorzugt zu mindestens 80 Gew.-%, besonders bevorzugt zu mindestens 90 Gew.-%, ganz besonders bevorzugt zu mindestens 95 Gew.-% und insbesondere zu mindestens 98 Gew.-% dimere Produkte. Die Tatsache, dass bei der Oligomerisierung also überwiegend dimere Produkte entstehen, die genau zwei Fettsäuremoleküle enthalten, rechtfertigt diese ohnehin gängige Benennung. Ein alternativer Ausdruck für den einschlägigen Begriff "Dimerfettsäuren" ist also "Gemisch enthaltend dimerisierte Fettsäuren". Durch den Einsatz von dimeren Fettsäuren wird also automatisch der Einsatz von difunktionellen Verbindungen (v) realisiert. Dies rechtfertigt auch die im Rahmen der vorliegenden Erfindung gewählte Angabe, dass bevorzugt Dimerfettsäuren als Verbindung (v) eingesetzt werden. Denn Verbindungen (v) sind augenscheinlich der Hauptbestandteil der als Dimerfettsäuren bezeichneten Gemische. Werden also Dimerfettsäuren als Verbindungen (v) eingesetzt, ist damit gemeint, dass diese Verbindungen (v) in Form von entsprechenden Gemischen mit wie oben beschriebenen monomeren und/oder trimeren Molekülen und/oder sonstigen Nebenprodukten eingesetzt werden.

Die einzusetzenden Dimerfettsäuren sind als Handelsprodukte zu erhalten. Zu nennen sind beispielsweise Radiacid 0970, Radiacid 0971, Radiacid 0972, Radiacid 0975, Radiacid 0976 und Radiacid 0977 der Firma Oleon, Pripol 1006, Pripol 1009, Pripol 1012, und Pripol 1013 der Firma Croda, Empol 1008, Empol 1061 und Empol 1062 der Firma BASF sowie Unidyme 10 und Unidyme TI der Firma Arizona Chemical.

Weitere bevorzugte Verbindungen (v) sind Dimerdiole beziehungsweise sind in Dimerdiolen enthalten. Dimerdiole sind seit langem bekannt und werden in der wissenschaftlichen Literatur auch als dimere Fettalkohole bezeichnet. Es handelt sich hierbei um Gemische, die beispielsweise durch Oligomerisierung von ungesättigten Fettsäuren oder deren Estern und anschließender Hydrierung der Säure- oder Estergruppen oder durch Oligomerisierung von ungesättigten Fettalkoholen hergestellt werden. Als Ausgangsstoffe können ungesättigte C₁₂- bis C₂₂-Fettsäuren oder deren Ester oder ungesättigte C₁₂- bis C₂₂-Fettalkohole eingesetzt werden. Die Kohlenwasserstoffreste, welche die Hydroxylgruppen in den Dimerdiolen verbinden sind definiert wie die Kohlenwasserstoffreste, welche die Carboxylgruppen der Dimerfettsäuren trennen.

So wird beispielsweise in der DE-11 98 348 ihre Herstellung durch Dimerisierung von ungesättigten Fettalkoholen mit basischen Erdalkalimetall-Verbindungen bei mehr als 280 °C beschrieben.

Sie können auch durch Hydrierung von wie oben beschriebenen Dimerfettsäuren und/oder deren Estern gemäß der deutschen Auslegeschrift DE-B-17 68 313 hergestellt werden. Unter den darin beschriebenen Umständen werden nicht nur die Carboxylgruppen der Fettsäuren zu Hydroxylgruppen hydriert, sondern auch gegebenenfalls noch in den Dimerfettsäuren bzw. deren Estern enthaltene Doppelbindungen zum Teil oder vollständig hydriert. Es ist aber auch möglich, die Hydrierung so durchzuführen, dass die Doppelbindungen während der Hydrierung vollständig erhalten bleiben. In diesem Fall fallen ungesättigte Dimerdiole an. Bevorzugt wird die Hydrierung so durchgeführt, dass die Doppelbindungen möglichst vollständig hydriert werden.

Eine andere Möglichkeit zur Herstellung von Dimerdiolen besteht in der Dimerisierung von ungesättigten Alkoholen in Gegenwart von Kieselerde/Tonerde-Katalysatoren und basischer Alkalimetallverbindungen gemäß der internationalen Anmeldung WO 91/13918.

Unabhängig von den beschriebenen Verfahren zur Herstellung der Dimerdiole werden bevorzugt solche Dimerdiole verwendet, die aus C₁₈-Fettsäuren oder deren Estern beziehungsweise C₁₈-Fettalkoholen hergestellt worden sind. Auf diese Weise entstehen überwiegend Dimerdiole mit 36 Kohlenstoffatomen.

Dimerdiole, die nach den oben genannten technischen Verfahren hergestellt worden sind, weisen stets auch wechselnde Mengen an Trimertriolen und monofunktionellen Alkoholen auf. In der Regel liegt dabei der Anteil an dimeren Molekülen über 70 Gew.-% und der Rest sind trimere Moleküle und monomere Moleküle. Im Sinne der Erfindung können sowohl diese Dimerdiole eingesetzt werden als auch reinere Dimerdiole mit über 90 Gew.-% an dimeren Molekülen. Insbesondere bevorzugt werden Dimerdiole mit über 90 bis 99 Gew.-% an dimeren Molekülen, wobei hiervon solche Dimerdiole wiederum bevorzugt sind, deren Doppelbindungen und/oder aromatische Reste zumindest teilweise oder vollständig hydriert sind. Ein alternativer Ausdruck für den einschlägigen Begriff "Dimerdiole" ist also "Gemisch enthaltend Dimere herstellbar durch Dimerisierung von Fettalkoholen". Durch den Einsatz von Dimerdiolen wird also automatisch der Einsatz von difunktionellen Verbindungen (v) realisiert. Dies rechtfertigt auch die im Rahmen der vorliegenden Erfindung gewählte Angabe, dass Dimerdiole als Verbindung (v) eingesetzt werden. Denn Verbindungen (v) sind augenscheinlich der Hauptbestandteil der als Dimerdiole bezeichneten Gemische. Werden also Dimerdiole als Verbindungen (v) eingesetzt, ist damit gemeint, dass diese Verbindungen (v) in Form von entsprechenden Gemischen mit wie oben beschriebenen monomeren und/oder trimeren Molekülen und/oder sonstigen Nebenprodukten eingesetzt werden.

Vorzugsweise sollte die mittlere Hydroxyfunktionalität der Dimerdiole 1,8 bis 2,2 betragen.

Im Sinne der vorliegenden Erfindung ist es daher besonders bevorzugt, solche Dimerdiole einzusetzen, die sich durch Hydrierung aus den oben beschriebenen Dimerfettsäuren herstellen lassen. Ganz besonders bevorzugt sind solche Dimerdiole, die zu ≥ 90 Gew.-% aus dimeren Molekülen, ≤ 5 Gew.-% aus trimeren Molekülen und ≤ als 5 Gew.-% aus monomeren Molekülen und sonstigen Nebenprodukten bestehen und/oder eine Hydroxylfunktionalität von 1,8 bis 2,2 aufweisen. Es ist besonders bevorzugt, solche Diole einzusetzen, die sich durch Hydrierung aus Dimerfettsäuren herstellen lassen, die zu 95 bis 98 Gew.-% aus dimeren Molekülen, weniger als 5 Gew.-% aus trimeren Molekülen und zu weniger als 1 Gew.-% aus monomeren Molekülen und sonstigen Nebenprodukten bestehen. Ebenfalls besonders bevorzugt werden solche Diole einzusetzen, die sich durch Hydrierung aus Dimerfettsäuren herstellen lassen, die zu ≥ 98 Gew.-% aus dimeren Molekülen, ≤ 1,5 Gew.-% aus trimeren Molekülen und zu ≤ 0,5 Gew.-% aus monomeren Molekülen und sonstigen Nebenprodukten bestehen.

Dimerfettsäuren, die zur Herstellung der Dimerdiole verwendet werden können, enthalten wie bereits oben beschrieben je nach Reaktionsführung sowohl aliphatische als auch gegebenenfalls aromatische Molekülfragmente. Die aliphatischen Molekülfragmente lassen sich ferner aufteilen in lineare und cyclische, welche wiederum gesättigt oder ungesättigt sein können. Durch eine Hydrierung lassen sich die aromatischen sowie die ungesättigten aliphatischen Molekülfragmente in entsprechende gesättigte aliphatische Molekülfragmente umwandeln. Die als Komponente (v) einsetzbaren Dimerdiole können demnach gesättigt oder ungesättigt sein. Bevorzugt sind die Dimerdiole aliphatisch, insbesondere aliphatisch und gesättigt.

Im Sinne der vorliegenden Erfindung werden bevorzugt solche Dimerdiole eingesetzt, die sich durch Hydrierung der Carbonsäuregruppen von vorzugsweise gesättigten aliphatischen Dimerfettsäuren herstellen lassen.

Besonders bevorzugt sind solche Diole, die sich durch Hydrierung aus Dimerfettsäuren herstellen lassen, die zu ≥ 98 Gew.-% aus dimeren Molekülen, ≤ 1,5 Gew.-% aus trimeren Molekülen und zu ≤ 0,5 Gew.-% aus monomeren Molekülen und sonstigen Nebenprodukten bestehen.

Besonders bevorzugt besitzen die Dimerdiole eine Hydroxylzahl von 170 bis 215 mg KOH/g, ganz besonders bevorzugt von 195 bis 212 mg KOH/g und insbesondere 200 bis 210 mg KOH/g, bestimmt mittels DIN ISO 4629. Besonders bevorzugt besitzen die Dimerdiole eine Viskosität von 1500 bis 5000 mPas, ganz besonders bevorzugt 1800 bis 2800 mPas (25 °C, Brookfield, ISO 2555).

Als ganz besonders bevorzugt einzusetzende Dimerdiole sind die Handelsprodukte Pripol® 2030 und insbesondere Priopol® 2033 der Firma Uniquema oder Sovermol® 908 der Firma BASF zu nennen.

Bevorzugte Reaktionsprodukte (R) sind herstellbar durch Umsetzung von Dimerfettsäuren mit aliphatischen, araliphatischen oder aromatischen dihydroxyfunktionellen Verbindungen. Aliphatische Verbindungen sind organische Verbindungen, die nicht aromatisch sind. Sie können linear, cyclisch oder verzweigt sein. Möglich sind beispielsweise Verbindungen, die aus zwei Hydroxylgruppen und einem aliphatischen Kohlenwasserstoffrest bestehen. Möglich sind auch Verbindungen, die neben den in den beiden Hydroxylgruppen enthaltenen Sauerstoffatomen weitere Heteroatome wie Sauerstoff oder Stickstoff, insbesondere Sauerstoff enthalten, beispielsweise in Form von verknüpfenden Ether- und/oder Esterbindungen. Araliphatische Verbindungen sind solche, die sowohl aliphatische als auch aromatische Struktureinheiten enthalten. Bevorzugt ist aber, dass die Reaktionsprodukte (R) durch Umsetzung von Dimerfettsäuren mit aliphatischen dihydroxyfunktionellen Verbindungen hergestellt werden.

Die aliphatischen, araliphatischen oder aromatischen dihydroxyfunktionellen Verbindungen haben bevorzugt ein zahlenmittleres Molekulargewicht von 120 bis 6000 g/mol, insbesondere bevorzugt von 200 bis 4500 g/mol.

Die Angabe eines zahlenmittleren Molekulargewichts impliziert also, dass es sich bei den bevorzugten dihydroxyfunktionellen Verbindungen um Mischungen von verschieden großen dihydroxyfunktionellen Molekülen handelt. Bevorzugt handelt es sich bei den dihydroxyfunktionellen Verbindungen um Polyetherdiole, Polyesterdiole oder Dimerdiole.

Bevorzugt ist im Rahmen der vorliegenden Erfindung, dass die Dimerfettsäuren und die aliphatischen, araliphatischen und/oder aromatischen, bevorzugt aliphatischen dihydroxyfunktionellen Verbindungen in einem molaren Verhältnis von 0,7/2,3 bis 1,6/1,7, bevorzugt von 0,8/2,2 bis 1,6/1,8 und ganz besonders bevorzugt von 0,9/2,1 bis 1,5/1,8 miteinander umgesetzt werden. Durch den Überschuss von Hydroxylgruppen werden damit hydroxyfunktionelle Reaktionsprodukte erhalten, die zudem eine geringe Säurezahl aufweisen. Durch die Höhe des Überschusses kann das Molekulargewicht des Reaktionsproduktes gesteuert werden. Wird ein nur geringer Überschuss des hydroxyfunktionellen Reaktanten eingesetzt, entstehen entsprechend langkettigere Produkte, da nur dann eine möglichst vollständige Umsetzung der vorhandene Säuregruppen garantiert ist. Bei einem höheren Überschuss des hydroxyfunktionellen Reaktanten entstehen entsprechend kurzkettigere Reaktionsprodukte. Das zahlenmittlere Molekulargewicht der Reaktionsprodukte wird natürlich auch vom Molekulargewicht der Reaktanten, beispielsweise den bevorzugt aliphatischen dihydroxyfunktionellen Verbindungen, beeinflusst. Das zahlenmittlere Molekulargewicht der bevorzugten Reaktionsprodukte kann breit variieren und liegt bevorzugt von 600 bis 40.000 g/mol, insbesondere von 800 bis 10.000 g/mol, ganz besonders bevorzugt von 1200 bis 5000 g/mol.

Die bevorzugten Reaktionsprodukte können also auch als lineare blockartige Verbindungen A-(B-A)ₙ beschrieben werden. Mindestens eine Art der Blöcke basiert dann auf einer Verbindung (v). Bevorzugt basieren die Blöcke B auf Dimerfettsäuren, das heißt Verbindungen (v). Die Blöcke A basieren bevorzugt auf aliphatischen dihydroxyfunktionellen Verbindungen, insbesondere bevorzugt auf aliphatischen Polyetherdiolen, Polyesterdiolen oder Dimerdiolen. Im letzteren Fall basiert das jeweilige Reaktionsprodukt also ausschließlich auf miteinander verknüpften Verbindungen (v).

Ganz besonders bevorzugte Reaktionsprodukte (R) sind herstellbar durch Umsetzung von Dimerfettsäuren mit mindestens einer aliphatischen dihydroxyfunktionellen Verbindung der allgemeinen Strukturformel (I): 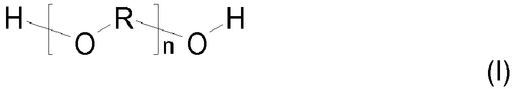 wobei es sich bei R um einen C₃- bis C₆-Alkylenrest handelt und n entsprechend so gewählt ist, dass die Verbindung der Formel (I) ein zahlenmittleres Molekulargewicht von 120 bis 6000 g/mol besitzt, die Dimerfettsäuren und die Verbindungen der Formel (I) in einem molaren Verhältnis von 0,7/2,3 bis 1,6/1,7 eingesetzt werden und wobei das resultierende Reaktionsprodukt ein zahlenmittleres Molekulargewicht von 600 bis 40000 g/mol und eine Säurezahl von kleiner 10 mg KOH/g besitzt.

In einer ganz besonders bevorzugten Ausführungsform wird hier n so gewählt, dass die Verbindung der Formel (I) ein zahlenmittleres Molekulargewicht von 450 bis 2200 g/mol, insbesondere 800 bis 1200 g/mol besitzt. Bei R handelt es sich bevorzugt um einen C₃- oder einen C₄-Alkylenrest. Besonders bevorzugt handelt es sich um einen iso-Propylen- oder einen Tetramethylenrest. Ganz besonders bevorzugt handelt es sich bei der Verbindung der Formel (I) um Polypropylenglycol oder um Polytetrahydrofuran. Die Dimerfettsäuren und die Verbindungen der Formel (I) werden hier bevorzugt in einem molaren Verhältnis von 0,7/2,3 bis 1,3/1,7 eingesetzt. Das resultierende Reaktionsprodukt besitzt in dieser Ausführungsform bevorzugt ein zahlenmittleres Molekulargewicht von 1500 bis 5000 g/mol, bevorzugt 2000 bis 4500 g/mol und ganz besonderes bevorzugt 2500 bis 4000 g/mol.

Ebenfalls ganz besonders bevorzugte Reaktionsprodukte (R) sind herstellbar durch Umsetzung von Dimerfettsäuren mit mindestens einer dihydroxyfunktionellen Verbindung der allgemeinen Strukturformel (II): 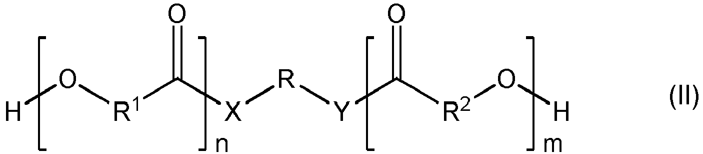 wobei
R für einen divalenten organischen Rest umfassend 2 bis 10 Kohlenstoffatome steht,
R¹ und R² unabhängig voneinander für geradkettige oder verzweigte Alkylenreste mit 2 bis 10 Kohlenstoffatomen stehen,
X und Y unabhängig voneinander für O, S oder NR³ stehen, worin R³ für Wasserstoff oder einen Alkylrest mit 1 bis 6 Kohlenstoffatomen steht, und
m und n entsprechend so gewählt sind, dass die Verbindung der Formel (II) ein zahlenmittleres Molekulargewicht von 450 bis 2200 g/mol besitzt,
wobei die Komponenten (a) und (b) in einem molaren Verhältnis von 0,7/2,3 bis 1,6/1,7 eingesetzt werden und das resultierende Reaktionsprodukt ein zahlenmittleres Molekulargewicht von 1200 bis 5000 g/mol und eine Säurezahl von kleiner 10 mg KOH/g besitzt.

In Strukturformel (II) steht R für einen divalenten organischen Rest umfassend 2 bis 10 Kohlenstoffatome und vorzugsweise 2 bis 6 Kohlenstoffatome. Der Rest R kann beispielsweise aliphatisch, aromatisch oder araliphatisch sein. Der Rest R kann neben Kohlenstoffatomen und Wasserstoffatomen auch Heteroatome wie beispielsweise O oder N enthalten. Er kann gesättigt oder ungesättigt sein. Vorzugsweise steht R für einen aliphatischen Rest mit 2 bis 10 Kohlenstoffatomen, besonders bevorzugt für einen aliphatischen Rest mit 2 bis 6 Kohlenstoffatomen und ganz besonders bevorzugt für einen aliphatischen Rest mit 2 bis 4 Kohlenstoffatomen. Beispielsweise steht der Rest R für C₂H₄, C₃H₆, C₄H₈ oder C₂H₄-O-C₂H₄.

R¹ und R² stehen unabhängig voneinander für geradkettige oder verzweigte Alkylenreste mit 2 bis 10 Kohlenstoffatomen, vorzugsweise 2 bis 6 Kohlenstoffatomen und besonders bevorzugt 3 bis 5 Kohlenstoffatomen. Vorzugsweise enthalten diese Reste nur Kohlenstoff und Wasserstoff.

In den Verbindungen der Strukturformel (II) können alle n Reste R¹ und alle m Reste R² gleich sein. Ebenso ist es aber auch möglich, das unterschiedliche Arten von Resten R¹ und R² vorhanden sind. Bevorzugt sind alle Reste R¹ und R² gleich.

Bei R¹ und R² handelt es sich ganz besonders bevorzugt um einen C₄- oder einen C₅-Alkylenrest, insbesondere um einen Tetramethylen- oder Pentamethylenrest. In einer ganz besonders bevorzugten Ausführungsform der vorliegenden Erfindung stehen beide Reste R¹ und R² für Pentamethylenreste.

X und Y stehen unabhängig voneinander für O, S oder NR³, worin R³ für Wasserstoff oder einen Alkylrest mit 1 bis 6 Kohlenstoffatomen steht. Vorzugsweise stehen X und Y unabhängig voneinander für O oder NR³, besonders bevorzugt stehen diese unabhängig voneinander für O und NH, ganz besonders bevorzugt stehen X und Y für O.

Die Indizes m und n sind entsprechend so gewählt, dass die Verbindungen der Strukturformel (II) ein zahlenmittleres Molekulargewicht von 450 bis 2200 g/mol, vorzugsweise 500 bis 1400 g/mol, besonders bevorzugt 500 bis 1200 g/mol besitzt. Die Polyesterpolyole der allgemeinen Strukturformel (I) lassen sich in einer ersten Route herstellen, indem Verbindungen HX-R-YH als sogenannte Starterverbindungen fungieren und durch Ringöffnungspolymerisation von Lactonen der Hydroxycarbonsäuren HO-R¹-COOH und HO-R²-COOH die hydroxyterminierten Polyesterketten an die Starterverbindung polymerisiert werden. Nach einer zweiten Route können natürlich auch zuerst alpha-Hydroxy-gamma-Carboxy-terminierte Polyester hergestellt werden, beispielsweise durch Ringöffnungspolymerisation von Lactonen der Hydroxycarbonsäuren HO-R¹-COOH und HO-R²-COOH oder durch Polykondensation der Hydroxycarbonsäuren HO-R¹-COOH und HO-R²-COOH. Die alpha-Hydroxy-gamma-Carboxy-terminierten Polyester können dann wiederum mit Verbindungen HX-R-YH mittels einer Kondensationsreaktion zu den erfindungsgemäß einzusetzenden Polyesterdiolen umgesetzt werden.

Entsprechende Verfahren sind beispielsweise in der Deutschen Offenlegungsschrift 2234265 "Hydroxylendständige Polylactone" des Anmelders Stamicarbon N.V. beschrieben.

Die Dimerfettsäuren und die Verbindungen der Formel (II) werden hier bevorzugt in einem molaren Verhältnis von 0,7/2,3 bis 1,3/1,7 eingesetzt. Das resultierende Reaktionsprodukt besitzt in dieser Ausführungsform bevorzugt ein zahlenmittleres Molekulargewicht von 1200 bis 5000 g/mol, bevorzugt 1200 bis 4500 g/mol und ganz besonderes bevorzugt 1200 bis 4000 g/mol.

Ebenfalls ganz besonders bevorzugte Reaktionsprodukte (R) sind herstellbar durch Umsetzung von Dimerfettsäuren mit Dimerdiolen, wobei die Dimerfettsäuren und Dimerdiole in einem molaren Verhältnis von 0,7/2,3 bis 1,6/1,7 eingesetzt werden und das resultierende Reaktionsprodukt ein zahlenmittleres Molekulargewicht von 1200 bis 5000 g/mol und eine Säurezahl von kleiner 10 mg KOH/g besitzt.

Bevorzugte Dimerdiole sind bereits weiter oben beschrieben. Bevorzugt ist hier, dass die Dimerfettsäuren und Dimerdiole in einem molaren Verhältnis von 0,7/2,3 bis 1,3/1,7 eingesetzt werden. Das resultierende Reaktionsprodukt besitzt hier bevorzugt ein zahlenmittleres Molekulargewicht von 1200 bis 5000 g/mol, bevorzugt 1300 bis 4500 g/mol und ganz besonderes bevorzugt 1500 bis 4000 g/mol.

Aus oben Gesagtem folgt, dass die Reaktionsprodukte (R) durch den ausschließlichen Einsatz von Verbindungen (v) herstellbar sind. Beispielsweise ist es möglich, die Reaktionsprodukte durch den Einsatz der oben beschriebenen bevorzugten Dimerfettsäuren und Dimerdiole herzustellen. Bei beiden Verbindungsklassen handelt es sich um Verbindungen (v) beziehungsweise beide Verbindungsklassen sind Gemische enthaltend difunktionelle Verbindungen (v). Genauso ist es aber möglich, durch die Umsetzung von Verbindungen (v), bevorzugt Dimerfettsäuren, mit anderen organischen Verbindungen, insbesondere solchen der Strukturformeln (I) und (II), Reaktionsprodukte (R) herzustellen.

Im Rahmen der vorliegenden Erfindung ist es bevorzugt, dass bei der Herstellung der Reaktionsprodukte 25 bis 100 mol-% mindestens einer Verbindung (v) eingesetzt werden. Werden ausschließlich Verbindungen (v) eingesetzt, so werden augenscheinlich mindestens zwei Verbindungen (v) eingesetzt.

Der Anteil der Reaktionsprodukte (R) liegt vorzugsweise im Bereich von 0,1 bis 15 Gew.-%, bevorzugt 0,5 bis 12 Gew.-%, besonders bevorzugt 0,75 bis 8 Gew.-%, jeweils bezogen auf das Gesamtgewicht des erfindungsgemäßen wässrigen Beschichtungsmittels.

Liegt der Gehalt der Reaktionsprodukte (R) unter 0,1 Gew.-% so ist es gegebenenfalls möglich, dass keine Verbesserung der Stabilität gegen Nadelstiche mehr erzielt wird. Liegt der Gehalt bei mehr als 15 Gew.-% so können unter Umständen Nachteile auftreten, wie zum Beispiel eine Inkompatibilität des besagten Reaktionsprodukts im wässrigen Beschichtungsmittel. Eine solche Inkompatibilität kann sich beispielsweise durch ungleichmäßigen Verlauf sowie durch Ausschwimmen oder Absetzen zeigen.

Das erfindungsgemäß einzusetzende Reaktionsprodukt ist in der Regel in wässrigen Systemen schwer löslich. Es wird daher bevorzugt direkt bei der Herstellung des wässrigen Beschichtungsmittels eingesetzt und nicht erst nach erfolgter Herstellung in das ansonsten fertige Beschichtungsmittel hinzugegeben.

Das erfindungsgemäße Beschichtungsmittel enthält mindestens ein spezielles Polyurethanharz (X), bevorzugt genau ein solches Polyurethanharz. Polyurethanharze sind grundsätzlich bekannt, ihre Herstellung und die bei der Herstellung einsetzbaren Ausgangsverbindungen, insbesondere Polyisocyanate und Polyole, welche auch zur Herstellung des Polyurethanharzes (X) eingesetzt werden, werden beispielsweise in WO 92/15405 A1, Seite 4, Zeile 28 bis Seite 10, Zeile 32 sowie Seite 14, Zeile 13 bis Seite 15, Zeile 28, oder auch in DE 199 48 004 A1, Seite 4, Zeile 19 bis Seite 9, Zeile 62 und/oder auch weiter oben bei der Beschreibung des in Schritt (i) der Herstellung des Mischpolymerisats (MP) eingesetzten Polyurethans beschrieben.

Es ist bevorzugt, dass das mindestens eine Polyurethanharz (X) carboxyfunktionell ist. Es hat bevorzugt eine Säurezahl von 5 bis 100 mg KOH/g, besonders bevorzugt 7 bis 50 mg KOH/g, insbesondere bevorzugt 15 bis 35 mg KOH/g. Insbesondere durch die vorhandenen Carbonsäuregruppen kann das Polyurethanharz (X) hydrophil stabilisiert werden beziehungsweise das Polyurethanharz (X) weist eine erhöhte Dispergierbarkeit in wässrigen Medien auf, sodass es ohne nachteilige Effekte wie unten beschrieben in wässrige Dispersionen überführt werden kann und damit auch in das erfindungsgemäße wässrige Beschichtungsmittel integriert werden kann. Solche Carbonsäuregruppen können bekanntermaßen je nach pH-Wert oder je nach Einsatz von in diesem Sinne bekannten Neutralisierungsmitteln auch als ionische Carboxylatgruppen vorliegen. Carbonsäuregruppen gehören also zu den funktionellen Gruppen, die in ionische Gruppen überführt werden können (potentiell ionische Gruppen). Zur Neutralisation der Carboxylgruppen werden beispielsweise Ammoniak, Amine und/oder Aminoalkohole wie Di- und Triethylamin, Dimethylaminoethanol, Diisopropanolamin, Morpholine und/oder N-Alkylmorpholine eingesetzt.

Die Carbonsäuregruppen werden im Rahmen der Herstellung des Polyurethanharzes (X) durch den Einsatz von entsprechenden Ausgangsverbindungen für die Herstellung dieser Polyurethanharze eingesetzt, nämlich durch carboxylgruppenhaltige Verbindungen (x.1) enthaltend mindestens eine Carbonsäuregruppe und mindestens eine gegenüber Isocyanatgruppen reaktive funktionelle Gruppe, bevorzugt Hydroxylgruppen. Auf diese Weise gelingt der Einbau der Verbindung (x.1) in das Polyurethangrundgerüst und gleichzeitig die Einführung von Carbonsäuregruppen in das Polyurethanharz (X). Bevorzugt enthält die Verbindung (x.1) mindestens eine Carbonsäuregruppe und mindestens zwei Hydroxylgruppen, ganz besonders bevorzugt eine Carbonsäuregruppe und zwei Hydroxylgruppen.

Als Verbindungen (x.1) kommen, sofern carboxylgruppenhaltig, beispielsweise Polyetherpolyole und/oder Polyesterpolyole, insbesondere Polyesterpolyole, in Betracht. Solche Polyesterpolyole werden beispielsweise in DE 39 03 804 A1 beschrieben und können auf dem Fachmann bekannte Weise hergestellt werden. So können die genannten Polyesterpolyole (x.1) beispielsweise über eine gängige Polyestersynthese in organischen Lösemitteln und in Anwesenheit gängiger Katalysatoren wie Dibutylzinnlaurat hergestellt werden, wobei neben typischerweise eingesetzten difunktionellen monomeren Ausgangsverbindungen, das heißt also Diolen und Dicarbonsäuren und entsprechenden Anhydriden, auch trifunktionelle Ausgangsverbindungen wie Triole, Tricarbonsäuren und entsprechende Anhydride wie beispielsweise Trimellitsäureanhydrid sowie Dihydroxycarbonsäuren eingesetzt werden können. Auf diese Weise gelingt über die Einführung von möglichen Verzweigungsstellen die Herstellung von Polyestern, die sowohl Hydroxylgruppen als auch Carbonsäuregruppen enthalten können. Da ein Polyester als polymeres System immer ein Gemisch verschieden großer Moleküle darstellt, verstehen sich die oben angegebenen Merkmale, beispielsweise hinsichtlich der Existenz von Carbonsäuregruppen oder Hydroxylgruppen in Polyestern (x.1), augenscheinlich als statistische Mittelwerte. Bevorzugt weisen solche Verbindungen (x.1) zahlenmittlere Molekulargewichte von 300 bis 3000 g/mol auf. Die Herstellung solcher Verbindungen (x.1) gelingt durch einfache Anpassung von beispielsweise Reaktionsbedingungen und eingesetzten Verhältnissen der beschriebenen Ausgangsstoffe.

Bevorzugt werden als Verbindung (x.1) jedoch niedermolekulare Verbindungen eingesetzt, die mindestens eine Carbonsäuregruppe und mindestens eine gegenüber Isocyanatgruppen reaktive funktionelle Gruppe, bevorzugt Hydroxylgruppen, aufweisen. Der Ausdruck "niedermolekulare Verbindung" ist im Rahmen der vorliegenden Erfindung so zu verstehen, dass es sich im Gegensatz zu höhermolekularen Verbindungen, insbesondere Polymeren, um solche handelt, denen als vorzugsweise monomeren Verbindungen ein diskretes Molekulargewicht zugeordnet werden kann. Eine niedermolekulare Verbindung ist also insbesondere kein Polymer, denn letztere stellen sich immer als Mischung von Molekülen dar und müssen über mittlere Molekulargewichte beschrieben werden. Vorzugsweise ist unter dem Begriff niedermolekulare Verbindung zu verstehen, dass entsprechende Verbindungen ein Molekulargewicht von weniger als 300 g/mol aufweisen. Bevorzugt ist der Bereich von 100 bis 200 g/mol.

In diesem Sinne bevorzugte Verbindungen (x.1) sind beispielsweise Monocarbonsäuren enthaltend zwei Hydroxylgruppen wie beispielsweise Dihydroxypropionsäure, Dihydroxybernsteinsäure und Dihydroxybenzoesäure. Ganz besonders bevorzugte Verbindungen (x.1) sind alpha, alpha Dimethylolalkansäuren wie 2,2-Dimethylolessigsäure, 2,2-Dimethylolpropionsäure, 2,2-Dimethylolbuttersäure und 2,2-Dimethylolpentansäure, insbesondere 2,2-Dimethylolpropionsäure.

Die Herstellung der Polyurethanharze (X) kann nach bekannten und etablierten Methoden in Masse oder Lösung erfolgen, insbesondere bevorzugt durch Umsetzung der eingesetzten Ausgangsverbindungen in typischen organischen Lösemitteln wie Methylethylketon bei erhöhten Temperaturen und gegebenenfalls unter Einsatz von zur Polyurethanherstellung typischen Katalysatoren. Solche Katalysatoren sind dem Fachmann bekannt, ein Beispiel ist Dibutylzinnlaurat.

Bevorzugt ist jedoch, dass die Herstellung bei Temperaturen von nicht höher als 120°C, bevorzugt von 30 bis 100°C, insbesondere von 40 bis 90°C erfolgt. Dies hat zum Vorteil, dass die in den Verbindungen (x.1) vorhandenen Carbonsäuregruppen nicht beziehungsweise nur in geringfügigem Maße mit den jedenfalls vorhandenen Polyolen unter Ausbildung von Esterbindungen reagieren, sodass die Carbonsäuregruppen in ihrer freien Form zurückbleiben und damit die Carboxyfunktionalität des Polyurethanharzes (X) begründen können. Die genannten Temperaturen reichen aber jedenfalls aus, um eine effektive Reaktion von Isocyanaten mit Alkoholen und Aminen zuzulassen. In diesem Sinne ebenfalls bevorzugt ist es, wenn man keine zur Polyurethanherstellung einsetzbaren Katalysatoren, beispielsweise Dibutylzinnlaurat, verwendet. Denn bekanntermaßen katalysieren zur Polyurethanherstellung einsetzbare Katalysatoren in der Regel auch die Esterbildung. Bevorzugt wird das Polyurethanharz nach der Herstellung, welche bevorzugt in organischen Lösemitteln abläuft, in eine wässrige Dispersion überführt. Dies geschieht vorzugsweise durch Zugabe von bereits oben genannten Neutralisationsmitteln und Zugabe von Wasser sowie Abdestillieren des mindestens einen organischen Lösemittels. Die Zugabe von Wasser wird so durchgeführt, dass die Dispersionen des Polyurethanharzes (X) einen Festkörpergehalt (nicht flüchtigen Anteil) von bevorzugt 10 bis 60 Gew.-%, insbesondere 15 bis 45 Gew.-% aufweisen. Das Polyurethanharz (X) wird bevorzugt in Form solcher Dispersionen im erfindungsgemäßen Beschichtungsmittel eingesetzt.

Bevorzugt verläuft die Herstellung der Polyurethanharze (X) so, dass zunächst difunktionelle Ausgangsverbindungen, bevorzugt Diole und Diisocyanate, sowie eine Komponente (x.1) miteinander zu einem noch isocyanatgruppenhaltigen Präpolymer umgesetzt werden und dieses dann mit einer mindestens drei Hydroxylgruppen, bevorzugt genau drei Hydroxylgruppen aufweisenden Ausgangsverbindung umgesetzt wird. Bevorzugt sind monomere Triole, insbesondere Trimethylolethan, Trimethylolpropan und Glycerin. Anschließend wird dann wie beschrieben mit vorzugsweise tertiären Aminen neutralisiert und das Polyurethanharze (X) in Wasser dispergiert.

Bevorzugt werden dabei im ersten Schritt mindestens ein Polyesterdiol, mindestens ein monomeres Diol, mindestens eine wie oben beschriebene monomere Verbindung (x.1) und mindestens ein Polyisocyanat umgesetzt und im zweiten Schritt dann mit mindestens einem wie oben beschriebenen monomeren Triol umgesetzt.

Bevorzugt ist im Rahmen der vorliegenden Erfindung, dass mindestens 70 Gew.-% der eingesetzten Ausgangsverbindungen zur Herstellung des Polyurethanharzes (X) solche sind, die als funktionelle polymerisierbare (das heißt zum Aufbau polymerer Grundgerüste geeigneter) Gruppen ausschließlich Isocyanatgruppen, Hydroxylgruppen und Carbonsäuregruppen sowie davon abgeleitete Anhydridgruppen enthalten. Auf diese Weise und die geeignete Wahl von an sich bekannten Reaktionsbedingungen zur Herstellung von Polyurethanharzen gelingt die Herstellung von Harzen, in denen die Verknüpfung der Ausgangsverbindungen vornehmlich über Urethanbindungen (durch Reaktion von Isocyanatgruppen und Hydroxylgruppen) verläuft und die Carbonsäuregruppen zur Realisierung der erfindungswesentlichen Säurezahl in nicht umgesetzter Form im Polymer zurückbleiben. Das Polyurethanharz (B) ist also ein Harz, in dem durch die entsprechende Wahl von Ausgangsverbindungen die Verknüpfung dieser Ausgangsverbindungen vornehmlich durch Urethanbindungen realisiert ist. Weitere funktionelle polymerisierbare Gruppen sind dem Fachmann bekannt. Letztlich kommen hierbei alle zur Herstellung von Polykondensations- und Polyadditionsharzen in Frage kommenden Gruppen sowie olefinisch ungesättigte Gruppen, wie sie sich in vinylgruppenhaltigen, allylgruppenhaltigen und acryl- sowie methacrylgruppenhaltigen Ausgangsverbindungen zur Herstellung von durch radikalische Polymerisation herstellbaren Harzen wie (Meth)Acrylat(co)polymerisaten finden, in Betracht. Beispielhaft genannt seien Thio-, N-Methylolamino-N-Alkoxymethylamino-, Imino-, Carbamat-, Allophanat, Epoxy-, Methylol-, Methylolether-, Siloxan-, Carbonat-, Amino, und beta-Hydroxyalkylamidgruppen sowie Vinyl-, Allyl- und Acryl-, Methacrylgruppen. Bevorzugt ist, dass mindestens 80 Gew.-%, bevorzugt mindestens 90 Gew.-%, ganz besonders bevorzugt 100 Gew.-% der eingesetzten Ausgangsverbindungen zur Herstellung der Polyurethanharze (X) ausschließlich Isocyanatgruppen, Hydroxylgruppen und Carbonsäuregruppen als polymerisierbare Gruppen enthalten. Insbesondere bevorzugt ist also, dass es sich bei dem Polyurethanharz (X) nicht um ein Mischpolymerisat handelt.

Das zahlenmittlere Molekulargewicht der Polyurethanharze (X) kann breit variieren. Bevorzugt liegt es im Bereich von 1000 bis 50000 g/mol, insbesondere 2000 bis 30000 g/mol.

Der Anteil der Polyurethanharze (X) liegt vorzugsweise im Bereich von 0,1 bis 15 Gew.-%, bevorzugt 0,5 bis 10 Gew.-%, besonders bevorzugt 0,75 bis 8 Gew.-%, jeweils bezogen auf das Gesamtgewicht des erfindungsgemäßen wässrigen Beschichtungsmittels.

Die erfindungsgemäßen Beschichtungsmittel enthalten bevorzugt Pigmente, das heißt farb- und/oder effektgebende Pigmente. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Die Begriffe farbgebendes Pigment und Farbpigment sind ebenso wie die Begriffe optisch effektgebendes Pigment und Effektpigment austauschbar.

Bevorzugte Effektpigmente sind beispielsweise plättchenförmige Metalleffektpigmente wie blättchenförmige Aluminiumpigmente, Goldbronzen, feuergefärbte Bronzen und/oder Eisenoxid-Aluminiumpigmente, Perglanzpigmente wie Fischsilber, basisches Bleicarbonat, Bismutoxidchlorid und/oder Metalloxid-Glimmer-Pigmente und/oder sonstige Effektpigmente wie blättchenförmiges Graphit, blättchenförmiges Eisenoxid, Mehrschicht-Effekt-Pigmente aus PVD-Filmen und/oder Liquid Crystal Polymer-Pigmente. Besonders bevorzugt sind plättchenförmige Metalleffektpigmente, insbesondere blättchenförmige Aluminiumpigmente.

Als typische Farbpigmente zu nennen sind insbesondere anorganische farbgebende Pigmente wie Weißpigmente wie Titandioxid, Zink-Weiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Der Anteil der Pigmente kann beispielsweise im Bereich von 1 bis 30 Gew.-%, bevorzugt 1,5 bis 20 Gew.-%, besonders bevorzugt 2,0 bis 15 Gew.-%, bezogen auf das Gesamtgewicht des erfindungsgemäßen Beschichtungsmittels liegen.

Die erfindungsgemäßen Beschichtungsmittel enthalten durch den Einsatz der Komponenten (MP), (R) und (X) härtbare Bindemittel, insbesondere physikalisch und thermisch härtbare Bindemittel. Als Bindemittel wird im Rahmen der vorliegenden Erfindung gemäß einschlägiger DIN EN ISO 4618 der nichtflüchtige Anteil eines Beschichtungsmittels ohne Pigmente und Füllstoffe verstanden. Spezielle Bindemittel sind demnach beispielsweise auch lacktypische Additive, das Mischpolymerisat (MP), das Reaktionsprodukt (R), das Polyurethanharz (X) oder weitere wie unten beschriebene einsetzbare Polymere und wie unten beschriebene typische Vernetzungsmittel. Im Folgenden wird der Ausdruck allerdings, schon der besseren Übersichtlichkeit halber, hauptsächlich in Bezug auf bestimmte physikalisch und thermisch härtbare Polymere, beispielsweise bestimmte Polyurethane, Polyester, Polyacrylate und/oder Mischpolymerisate der genannten Polymere, verwendet.

Im Rahmen der vorliegenden Erfindung bedeutet der Begriff "physikalische Härtung" die Bildung eines Films durch Abgabe von Lösemittel aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Wärme initiierte Vernetzung einer Lackschicht, bei der in dem zugrunde liegenden Lack entweder ein separat vorliegendes Vernetzungsmittel oder aber selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, d.h. Gruppen, die mit Gruppen derselben Art reagieren, bereits in den Bindemittelmolekülen vorhanden, liegen selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28 bis Seite 9, Zeilen 24 bekannt.

Das erfindungsgemäße Beschichtungsmittel enthält bevorzugt noch mindestens ein von den Mischpolymerisaten (MP), den Reaktionsprodukten (R) und den Polyurethanharzen (X) verschiedenes Polymer als Bindemittel, insbesondere mindestens ein Polymer ausgewählt aus der Gruppe bestehend aus Polyurethanen, Polyestern, Polyacrylaten und/oder Mischpolymerisaten der genannten Polymere, insbesondere Polyurethan-Polyacrylate. Bevorzugte von den Mischpolymerisaten (MP) verschiedene Polyurethan-Polyacrylat-Mischpolymerisate (acrylierte Polyurethane) und deren Herstellung werden beispielsweise in WO 91/15528 A1, Seite 3, Zeile 21 bis Seite 20, Zeile 33 sowie in DE 4437535 A1, Seite 2, Zeile 27 bis Seite 6, Zeile 22 beschrieben. Die beschriebenen Polymere als Bindemittel sind bevorzugt hydroxyfunktionell. Bevorzugt enthalten die erfindungsgemäßen Beschichtungsmittel neben dem mindestens einen Mischpolymerisat (MP), dem mindestens einen Reaktionsprodukt (R) und dem mindestens einen Polyurethanharz (X) mindestens ein von den Mischpolymerisaten (MP) verschiedenes Polyurethan-Polyacrylat-Mischpolymerisat.

Der Anteil der weiteren Polymere als Bindemittel, bevorzugt dem mindestens einen von den Mischpolymerisaten (MP) verschiedenen Polyurethan-Polyacrylat-Mischpolymerisat, liegt vorzugsweise im Bereich von 0,5 bis 20,0 Gew.-%, bevorzugt 1,0 bis 15,0 Gew.-%, besonders bevorzugt 1,5 bis 10,0 Gew.-%, jeweils bezogen auf das Gesamtgewicht des erfindungsgemäßen Beschichtungsmittels.

Zudem enthält das erfindungsgemäße Beschichtungsmittel bevorzugt mindestens ein an sich bekanntes typisches Vernetzungsmittel. Bevorzugt enthält es als Vernetzungsmittel mindestens ein Aminoplastharz und/oder ein blockiertes Polyisocyanat, bevorzugt ein Aminoplastharz. Unter den Aminoplastharzen sind insbesondere Melaminharze bevorzugt.

Der Anteil der Vernetzungsmittel, insbesondere Aminoplastharze und/oder blockierte Polyisocyanate, besonders bevorzugt Aminoplastharze, darunter bevorzugt Melaminharze, liegt vorzugsweise im Bereich von 0,5 bis 20,0 Gew.-%, bevorzugt 1,0 bis 15,0 Gew.-%, besonders bevorzugt 1,5 bis 10,0 Gew.-%, jeweils bezogen auf das Gesamtgewicht des erfindungsgemäßen Beschichtungsmittels.

Aus obigem folgt, dass das erfindungsgemäße Beschichtungsmittel bevorzugt thermisch härtbar und fremdvernetzend ist. Denn durch den Einsatz von hydroxyfunktionellen Reaktionsprodukten (R), bevorzugt hydroxyfunktionellen Polyurethan-Polyacrylat-Mischpolymerisaten, die von den Mischpolymerisaten (MP) verschieden sind sowie Vernetzungsmitteln, insbesondere Melaminharzen, kann eine entsprechende Fremdvernetzung realisiert werden. Unter der Angabe, dass ein Beschichtungsmittel selbst- und/oder fremdvernetzend ist, ist im Rahmen der vorliegenden Erfindung zu verstehen, dass dieses Beschichtungsmittel Polymere als Bindemittel und gegebenenfalls Vernetzungsmittel enthält, die entsprechend miteinander vernetzen können. Die zugrunde liegenden Mechanismen sowie einsetzbaren Bindemittel und Vernetzungsmittel sind weiter oben beschrieben. Bevorzugt enthält das erfindungsgemäße Beschichtungsmittel zudem mindestens einen Verdicker. Als Verdicker eignen sich anorganische Verdicker aus der Gruppe der Schichtsilikate. Besonders geeignet sind Lithium-Aluminium-Magnesium Silikate. Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylat-Copolymerisat-Verdickern, wie beispielsweise dem Handelsprodukt Rheovis AS S130 (BASF) und Polyurethanverdickern, wie beispielsweise dem Handelsprodukt Rheovis PU 1250 (BASF). Die eingesetzten Verdicker sind von den zuvor beschriebenen Polymeren, beispielsweise den bevorzugten Bindemitteln, verschieden. Bevorzugt sind anorganische Verdicker aus der Gruppe der Schichtsilikate.

Der Anteil der Verdicker liegt vorzugsweise im Bereich von 0,01 bis 5,0 Gew.-%, bevorzugt 0,02 bis 4 Gew.-%, besonders bevorzugt 0,05 bis 3,0 Gew.-%, jeweils bezogen auf das Gesamtgewicht des erfindungsgemäßen Beschichtungsmittels.

Darüber hinaus kann der wässrige Basislack (b.2.1) noch mindestens einen Zusatzstoff enthalten. Beispiele für derartige Zusatzstoffe sind rückstandsfrei oder im Wesentlichen rückstandsfrei thermisch zersetzbare Salze, von den bereits genannten Polymeren als Bindemittel verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel.

Geeignete Zusatzstoffe der vorstehend genannten Art sind beispielsweise aus
- der deutschen Patentanmeldung DE 199 48 004 A1, Seite 14, Zeile 4, bis Seite
   17, Zeile 5,
- dem deutschen Patent DE 100 43 405 C1, Spalte 5, Absätze [0031] bis [0033],
bekannt. Sie werden in den üblichen und bekannten Mengen eingesetzt. Beispielsweise kann ihr Anteil im Bereich von 1,0 bis 20,0 Gew.-%, bezogen auf das Gesamtgewicht des wässrigen Beschichtungsmittels, liegen.

Der Festkörpergehalt der erfindungsgemäßen Beschichtungsmittel kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der erfindungsgemäßen Beschichtungsmittels bei 5 bis 70 Gew.-%, besonders bevorzugt bei 8 bis 60 Gew.-%, ganz besonders bevorzugt bei 12 bis 55 Gew.-%.

Unter Festkörpergehalt (nicht-flüchtiger Anteil, Feststoffgehalt) ist derjenige Gewichtsanteil zu verstehen, der unter festgelegten Bedingungen beim Eindampfen als Rückstand verbleibt. In der vorliegenden Anmeldung wird der Festkörper nach DIN EN ISO 3251 bestimmt. Dazu wird der Basislack für 60 Minuten bei 130°C eingedampft.

Diese Prüfmethode wird, sofern nicht anders angegeben, ebenfalls angewandt, um beispielsweise den Anteil verschiedener Komponenten des Beschichtungsmittels, beispielsweise eines Mischpolymerisats (MP) oder eines Vernetzungsmittels, am Gesamtgewicht des Beschichtungsmittels festzulegen beziehungsweise vorzubestimmen. Es wird also der Festkörper einer Dispersion eines Mischpolymerisates (MP) oder eines Vernetzungsmittels, welche dem Beschichtungsmittels zugegeben werden soll, bestimmt. Durch Berücksichtigung des Festkörpers der Dispersion und der in dem Beschichtungsmittel eingesetzten Menge der Dispersion kann dann der Anteil der Komponente an der Gesamtkomposition ermittelt beziehungsweise festgelegt werden.

Das erfindungsgemäße Beschichtungsmittel ist wässrig. Der Ausdruck "wässrig" ist dem Fachmann in diesem Zusammenhang bekannt. Gemeint ist grundsätzlich ein Beschichtungsmittel, das nicht ausschließlich auf organischen Lösemitteln basiert, das heißt nicht ausschließlich als Lösemittel solche auf organischer Basis enthält, sondern der im Gegenteil als Lösemittel einen signifikanten Anteil Wasser enthält. Bevorzugt ist "wässrig" im Rahmen der vorliegenden Erfindung so zu verstehen, dass das jeweilige Beschichtungsmittel, einen Anteil von mindestens 40 Gew.-%, bevorzugt mindestens 50 Gew.-%, ganz besonders bevorzugt mindestens 60 Gew.-%, insbesondere mindestens 70 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 40 bis 95 Gew.-%, insbesondere 50 bis 92,5 Gew.-%, ganz besonders bevorzugt 60 bis 90 Gew.-%, besonders bevorzugt 70 bis 87,5 Gew.-%, jeweils bezogen auf die Gesamtmenge der enthaltenen Lösemittel.

Dieselbe Definition von wässrig gilt selbstverständlich für alle weiteren im Rahmen der vorliegenden Erfindung beschriebenen Systeme, beispielsweise für den wässrigen Charakter der wässrigen Dispersionen der Mischpolymerisate (MP).

Die Herstellung der erfindungsgemäßen Beschichtungsmittel kann unter Einsatz der für die Herstellung von Basislacken üblichen und bekannten Mischverfahren und Mischaggregaten erfolgen.

Bevorzugt handelt es sich bei dem erfindungsgemäßen Beschichtungsmittel um einen Basislack beziehungsweise das Beschichtungsmittel wird bevorzugt als Basislack eingesetzt. Dies gilt insbesondere im Rahmen des in der Folge beschriebenen erfindungsgemäßen Verfahrens.

Unter einem Basislack ist ein in der Automobillackierung und allgemeinen Industrielackierung eingesetzter, in der Regel farb- und oder effektgebender Zwischenbeschichtungsstoff zu verstehen. Dieser wird im Allgemeinen auf einem mit Füller oder Grundierfüller vorbehandelten Metall- oder Kunststoffuntergrund, mitunter auch direkt auf dem Kunststoffuntergrund aufgebracht. Auch Altlackierungen, welche gegebenenfalls noch vorbehandelt werden müssen (beispielsweise durch Anschleifen), können als Untergründe dienen. Mittlerweile ist es durchaus üblich, mehr als eine Basislackschicht aufzutragen. Dementsprechend stellt in einem solchen Fall eine erste Basislackschicht den Untergrund für eine zweite dar. Um eine Basislackschicht insbesondere gegen Umwelteinflüsse zu schützen, wird auf dieser mindestens noch eine zusätzliche Klarlackschicht appliziert.

Das erfindungsgemäße Verfahren und die erfindungsgemäße Mehrschichtlackierung

Ebenfalls Gegenstand der vorliegenden Erfindung ist ein Verfahren zur Herstellung von Mehrschichtlackierungen, bei dem
(1) ein wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
welches dadurch gekennzeichnet ist, dass der in Stufe (1) eingesetzte wässrige Basislack ein erfindungsgemäßes Beschichtungsmittel ist.

Alle vorstehend genannten Ausführungen hinsichtlich des erfindungsgemäßen Beschichtungsmittels gelten auch für das erfindungsgemäße Verfahren. Dies gilt insbesondere auch für alle bevorzugten, besonders bevorzugten und ganz besonders bevorzugten Merkmale. Insbesondere bevorzugt enthält der Basislack ein Pigment, ist also pigmentiert.
Das besagte Verfahren wird bevorzugt zur Herstellung von farbgebenden Mehrschichtlackierungen, effektgebenden Lackierungen und farb- und effektgebenden Lackierungen eingesetzt.

Die Applikation des erfindungsgemäß einzusetzenden wässrigen Basislacks erfolgt üblicherweise auf mit Füller oder Grundierfüller vorbehandelte Metall- oder Kunststoffsubstrate. Gegebenenfalls kann der besagte Basislack auch direkt auf dem Kunststoffuntergrund aufgebracht werden.

Soll ein Metallsubstrat beschichtet werden, so wird dieses vor der Applikation des Füllers oder Grundierfüllers bevorzugt noch mit einer Elektrotauchlackierung beschichtet.

Wird ein Kunststoffsubstrat beschichtet, so wird dieses vor der Applikation des Füllers oder Grundierfüllers bevorzugt noch vorbehandelt. Die hierzu am häufigsten angewendeten Verfahren sind das Beflammen, die Plasmabehandlung und die Corona-Entladung. Bevorzugt wird das Beflammen eingesetzt.

Die Applikation des erfindungsgemäßen pigmentierten wässrigen Basislacks auf ein Metallsubstrat kann in den im Rahmen der Automobilindustrie üblichen Schichtdicken im Bereich von beispielsweise 5 bis 100 Mikrometer, bevorzugt 5 bis 60 Mikrometer erfolgen. Dabei werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des pigmentierten wässrigen Basislacks kann dieser nach bekannten Methoden getrocknet werden. Beispielsweise können (1-Komponenten)-Basislacke, welche bevorzugt sind, bei Raumtemperatur für 1 bis 60 Minuten abgelüftet werden und darauf folgend bevorzugt bei gegebenenfalls leicht erhöhten Temperaturen von 30 bis 90°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen. Bevorzugt sind Zweikomponentenklarlacke.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch bei Temperaturen von 60 bis 200°C.

Alle im Rahmen der vorliegenden Erfindung angegebenen Schichtdicken verstehen sich als Trockenschichtdicken. Es handelt sich also um die Schichtdicke der jeweils gehärteten Schicht. Ist also angegeben, dass ein Lack in einer bestimmten Schichtdicke aufgetragen wird, so ist darunter zu verstehen, dass der Lack so aufgetragen wird, dass die genannte Schichtdicke nach der Härtung resultiert.

Die Beschichtung von Kunststoffsubstraten erfolgt im Grunde genommen analog zu der von Metallsubstraten. Allerdings wird hier im Allgemeinen bei deutlich niedrigeren Temperaturen von 30 bis 90 °C gehärtet, um keine Beschädigung und/oder Deformation des Substrats zu erzeugen.

Mit Hilfe des erfindungsgemäßen Verfahrens können also metallische und nichtmetallische Substrate, insbesondere Kunststoffsubstrate, vorzugsweise Automobilkarosserien oder Teile davon lackiert werden.

Das erfindungsgemäße Verfahren kann ferner zur Doppellackierung in der OEM-Lackierung eingesetzt werden. Darunter ist zu verstehen, dass ein Substrat, welches mit Hilfe des erfindungsgemäßen Verfahrens beschichtet wurde, ein zweites Mal, ebenfalls mit Hilfe des erfindungsgemäßen Verfahrens, lackiert wird.
Die Erfindung betrifft ferner Mehrschichtlackierungen, welche nach dem oben beschriebenen Verfahren herstellbar sind. Diese Mehrschichtlackierungen sollen im Folgenden als erfindungsgemäße Mehrschichtlackierungen bezeichnet werden.

Alle vorstehend genannten Ausführungen hinsichtlich des erfindungsgemäßen wässrigen Beschichtungsmittels und des erfindungsgemäßen Verfahrens gelten entsprechend auch für die besagte Mehrschichtlackierung. Dies gilt insbesondere auch für alle bevorzugten, besonders bevorzugten und ganz besonders bevorzugten Merkmale.

Bevorzugt handelt es sich bei den erfindungsgemäßen Mehrschichtlackierungen um farbgebende Mehrschichtlackierungen, effektgebenden Lackierungen und farb- und effektgebenden Lackierungen.

Ein weiterer Aspekt der Erfindung betrifft das erfindungsgemäße Verfahren, wobei es sich bei dem besagten Substrat aus Stufe (1) um eine Mehrschichtlackierung handelt, welche Fehlstellen besitzt. Bei dieser Substrat-Mehrschichtlackierung, welche Fehlstellen besitzt, handelt es sich also um eine Originallackierung, welche ausgebessert ("Spot Repair") oder komplett überlackiert (Doppellackierung) wird.

Das erfindungsgemäße Verfahren eignet sich demnach auch zur Ausbesserung von Fehlstellen auf Mehrschichtlackierungen. Als Fehlstellen beziehungsweise Filmfehler werden im Allgemeinen Störungen an und in der Beschichtung, die meist nach ihrer Form oder ihrem Aussehen benannt werden, bezeichnet. Dem Fachmann ist eine Vielzahl von möglichen Arten von solchen Filmfehlern bekannt. Diese werden beispielsweise in Römpp-Lexikon Lacke und Druckfarben, Georg Thieme Verlag, Stuttgart, New York, 1998, Seite 235,"Filmfehler" beschrieben.

Zudem betrifft die vorliegende Erfindung die Verwendung des wässrigen Beschichtungsmittels zur Verbesserung der Stabilität von Mehrschichtlackierungen gegen optische Fehlstellen, insbesondere Nadelstiche. Werden die erfindungsgemäßen wässrigen Beschichtungsmittel also bei der Lackierung von Metall- und Kunststoffsubstraten eingesetzt, so führt ihr Einsatz insbesondere zu einer Verbesserung der Stabilität der aufgebauten Lackierung gegen Nadelstiche. Dies gilt insbesondere, wenn das erfindungsgemäße wässrige Beschichtungsmittel als Basislack eingesetzt wird und nach dem erfindungsgemäßen Verfahren eine erfindungsgemäße Mehrschichtlackierung aufgebaut wird.

Die Stabilität gegen Nadelstiche kann nach bekannten Methoden getestet werden. Insbesondere bieten sich die schon eingangs erläuterte Nadelstichgrenze und die Anzahl an Nadelstichen bei einer vorgegebenen Schichtdicke als Nachweis für die Stabilität gegen Nadelstiche an.

Im Folgenden wird die Erfindung anhand von Beispielen erläutert.

### Beispiele

### Spezifizierung bestimmter eingesetzter Komponenten und Messmethoden

### Dimerfettsäure:

Die eingesetzte Dimerfettsäure enthält weniger als 1,5 Gew.-% trimere Moleküle, 98 Gew.-% dimere Moleküle und kleiner 0,3 Gew.-%Fettsäure (Monomer). Sie wird auf der Basis von Linolen-, Linol- und Ölsäure hergestellt (Pripol™ 1012-LQ-(GD) (Fa. Croda).

### Polyester 1 (P1):

Hergestellt gemäß Beispiel D, Spalte 16, Z. 37 bis 59 der DE 4009858 A. Die entsprechende Lösung des Polyesters hat einen Festkörpergehalt von 60 Gew.-%, wobei als Lösemittel Butylglykol anstatt Butanol verwendet wurde, das heißt als Lösemittel hauptsächlich Butylglykol und Wasser enthalten sind.

### Bestimmung des zahlenmittleren Molekulargewichts:

Das zahlenmittlere Molekulargewicht wurde mittels Dampfdruckosmose bestimmt. Gemessen wurde mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin Benzil als Eichsubstanz eingesetzt wurde).

### Herstellung eines erfindungsgemäß einzusetzenden Mischpolymerisats (MP)

Ein Mischpolymerisat (MP) beziehungsweise eine wässrige Dispersion enthaltend dieses Polymerisat wurde wie folgt hergestellt.
a) Eine Dispersion eines alpha-methylstyryl-haltigen Polyurethans wurde in Anlehnung an die Patentschrift DE 19948004 B4, Seite 27, Beispiel 1, "Herstellung eines erfindungsgemäßen Polyurethans (B)", hergestellt, wobei zusätzlich Trimethylolpropan eingesetzt wurde und der Festanteil der resultierenden Dispersion nur 29 statt 35,1 Gew.-% betrug. In Anlehnung an das in der Patentschrift DE 19948004 B4 erwähnte Addukt (B2), Herstellbeispiel 1, wurde ein Addukt mit Monoethanolamin statt mit Diethanolamin hergestellt:
   Hierzu wurde zuerst in einem Reaktionsgefäß, ausgerüstet mit Rührer, Innenthermometer, Rückflußkühler und elektrischer Heizung unter Stickstoff 200,0 Gewichtsteile Methylethylketon, 800,0 Gewichtsteile N-Methylpyrrolidon und 221,3 Gewichtsteile Monoethanolamin (Fa. BASF SE) bei 20°C vorgelegt. Zu dieser Mischung wurden während eineinhalb Stunden 778,7 Gewichtsteile 1-(1-Isocyanato-1-methylethyl)-3-(1-methylethenyl)-benzol (TMI^{®} (META) Unsaturated Aliphatic Isocyanate, Fa. Cytec) mit einem Isocyanatgehalt von 20,4 Gew.-% Isocyanat zugetropft, so daß die Reaktionstemperatur 40°C nicht überschritten wurde. Die resultierende Reaktionsmischung wurde so lange gerührt, bis keine freien Isocyanatgruppen mehr nachweisbar waren. Danach wurde die Reaktionsmischung mit 200 ppm Hydrochinon stabilisiert.
   Der theoretische Feststoffgehalt der so hergestellten Lösung des beschriebenen Addukts lag bei 50 Gew.-%.
   Nun wurde in einem weiteren Reaktionsgefäß, ausgerüstet mit Rührer, Innenthermometer, Rückflußkühler und elektrischer Heizung, 431,7 Gewichtsteile eines linearen Polyesterpolyols und 69,7 Gewichtsteile Dimethylolpropionsäure (Fa. GEO Speciality Chemicals) in 355,8 Gewichtsteilen Methylethylketon und 61,6 Gewichtsteilen N-Methylpyrrolidon unter Stickstoff gelöst. Das lineare Polyesterpolyol wurde zuvor aus dimerisierter Fettsäure (Pripol ^{®} 1012, Fa. Uniqema), Isophthalsäure (Fa. BP Chemicals) und Hexan-1,6-diol (Fa. BASF SE) hergestellt (Gewichtsverhältnis der Ausgangsstoffe: dimere Fettsäure zu Isophthalsäure zu Hexan-1,6-diol = 54,00 : 30,02 : 15,98) und wies eine Hydroxylzahl von 73 mg KOH / g Festanteil und ein zahlenmittlere Molmasse von 1379 g/mol auf. Zu der resultierenden Lösung wurden bei 45°C 288,6 Gewichtsteile Isophorondiisocyanat (Basonat® I, Fa. BASF SE) mit einem Isocyanatgehalt von 37,75 Gew.-% hinzugegeben. Nach dem Abklingen der exothermen Reaktion wurde die Reaktionsmischung unter Rühren langsam auf 80°C erwärmt. Es wurde bei dieser Temperatur weiter gerührt, bis der Isocyanatgehalt der Lösung 3,2 Gew.-% betrug und konstant war. Danach wurde die Reaktionsmischung auf 65°C abgekühlt und 85,2 Gewichtsteile des oben beschriebenen Addukts zusammen mit 21,8 Gewichtsteilen Trimethylolpropan (Fa. BASF SE) hinzugegeben. Die resultierende Reaktionsmischung wurde so lange bei 65°C gerührt, bis der Isocyanatgehalt der Lösung auf 1,0 Gew.-% gesunken war. Jetzt wurden 22,2 Gew.-% Diethanolamin (Fa. BASF SE) zugegeben und der Gehalt an Isocyanatgruppen verfolgt, bis keine freien Isocyanatgruppen mehr nachweisbar waren. Das resultierende, gelöste Polyurethan wurde mit 139,7 Gewichtsteilen Methoxypropanol und 43,3 Gewichtsteilen Triethylamin (Fa. BASF SE) versetzt. 30 Minuten nach der Aminzugabe wurde die Temperatur der Lösung auf 60°C gesenkt, wonach während 30 Minuten 1981 Gewichtsteile deionisiertes Wasser unter Rühren hinzugegeben wurden. Aus der resultierenden Dispersion wurde das Methylethylketon bei 60°C unter Vakuum abdestilliert. Hiernach wurden eventuelle Lösemittel- und Wasserverluste ausgeglichen.
   Die so erhaltene Dispersion eines alpha-methylstyryl-haltigen Polyurethans wies einen Feststoffgehalt von 29,0 Gew-% auf, die Säurezahl lag bei 34,0 mg KOH / g Feststoffgehalt und der pH-Wert bei 7,0 (gemessen bei 23°C).
b) Zur Herstellung der wässrigen Primärdispersion des erfindungsgemäßen Mischpolymerisats (MP) wurden unter Stickstoffatmosphäre 1961,2 Gewichtsteile der alpha-Methylstyryl-haltigen Polyurethandispersion gemäß a) mit 40,0 Gewichtsteilen Methoxypropanol (0,07% auf Polyurethan) und 686,5 Gewichtsteilen deionisiertem Wasser verdünnt und auf 80°C erhitzt. Nachdem der Reaktorinhalt auf 80°C temperiert wurde, wurden 0,6 Gewichtsteile Ammoniumperoxodisulfat, gelöst in 35,7 Gewichtsteilen deionisiertem Wasser, unter Normaldruck in den Reaktor gegeben. Anschließend wurde unter fortwährendem Rühren ein Gemisch aus 301,6 Gewichtsteilen Methylmethacrylat, 261,6 Gewichtsteilen n-Butylacrylat, 5,6 Gewichtsteilen Allylmethacrylat (0,87 Mol-% bezogen auf Gesamtvinylmonomer) und 134,9 Gewichtsteilen N-Methylpyrrolidon während fünf Stunden gleichmäßig zugegeben. Mit Beginn der Zugabe der Monomermischung wurde eine Lösung von 1,1 Gewichtsteilen Ammoniumperoxodisulfat in 71,3 Gewichtsteilen deionisiertem Wasser ebenfalls innerhalb von fünf Stunden zugegeben.

Während der radikalischen Polymerisation wurde im 30 Minuten - Takt der Gehalt an freien Monomeren mittels Gaschromatographie (GC) bestimmt (GC: einmal 50m Silica-Kapillarsäule mit Polyethylenglykol-Phase und einmal mit 50m Silica-Kapillarsäule mit Polydimethylsiloxan-Phase, Trägergas Helium, Splitinjektor 150°C, Ofentemperatur 40 - 220°C, Flammionisationsdetektor, Detektortemperatur 275°C, interner Standard Isobutylacrylat), wobei nach 30 min der höchste Gesamtgehalt Monomer bezogen auf Dispersion mit 0,5 Gew.-% ermittelt wurde (3,1 Gew.-% bezogen auf die Gesamtmenge an zur Polymerisation eingesetzten olefinisch ungesättigten Monomeren).

Nach gleichzeitigem Ende der Monomer- und Initiatordosierung wurde die resultierende Reaktionsmischung bei 80°C eine weitere Stunde gerührt und anschließend auf Raumtemperatur abgekühlt.

Die resultierende Primärdispersion des Mischpolymerisats wies eine sehr gute Lagerstabilität auf. Ihr Feststoffgehalt lag bei 32,5 Gew.-%, die Säurezahl bei 18,8 mg KOH / g Feststoffgehalt und ihr pH-Wert bei 7,0. Die Teilchengröße (z-Mittel) mittels Photokorrelationsspektroskopie betrug 96 nm. Mittels Gaschromatographie (GC: einmal mit 50m Silica-Kapillarsäule mit Polyethylenglykol-Phase und einmal 50m Silica-Kapillarsäule mit Polydimethylsiloxan-Phase, Trägergas Helium, Splitinjektor 250°C, Ofentemperatur 40 - 220°C, Flammionisationsdetektor, Detektortemperatur 275°C, interner Standard n-Propylglykol) wurde ein Gehalt von 2,7 Gew.-% Methoxypropanol und 5,7 Gew.-% N-Methylpyrrolidon ermittelt.

Der Gelanteil wurde gravimetrisch nach Extraktion des gefriergetrockneten Polymeren mittels Tetrahydrofuran mit 80,3 Gew.-% ermittelt. Dazu wurde die Dispersion gefriergetrocknet, die Masse des gefriergetrockneten Polymeren bestimmt, um das Polymer anschließend 24 Stunden bei 25°C in einem Überschuss an Tetrahydrofuran (Verhältnis Tetrahydrofuran zu gefriergetrocknetem Mischpolymerisat = 300 : 1) zu extrahieren. Der unlösliche Anteil (Gelanteil) wurde isoliert, 4 Stunden bei 50°C im Umluftofen getrocknet, und anschließend zurückgewogen.

### Herstellung eines erfindungsgemäß einzusetzenden Reaktionsproduktes (R)

In einem 4 l Edelstahlreaktor, ausgestattet mit Ankerrührer, Thermometer, Kühler, Thermometer zur Kopftemperaturmessung und Wasserabscheider wurden 2000,0 g lineares, diolisches PolyTHF1000 (2 mol), 579,3 g Dimerfettsäure (1 mol) und 51 g Cyclohexan in Anwesenheit von 2,1 g Di-n-butylzinnoxid (Axion^{®} CS 2455, Fa. Chemtura) auf 100°C aufgeheizt. Es wurde langsam weitergeheizt bis zum Einsetzen der Kondensation. Bei einer maximalen Kopftemperatur von 85°C wurde dann schrittweise bis auf 220°C weitergeheizt. Der Reaktionsfortschritt wurde über die Bestimmung der Säurezahl verfolgt. Nach Erreichen einer Säurezahl von ≤ 3 mg KOH/g wurde noch vorhandenes Cyclohexan unter Vakuum abdestilliert. Man erhielt ein zähflüssiges Harz.
Kondensatmenge (Wasser): 34,9 g
Säurezahl: 2,7 mg KOH / g
Feststoffgehalt (60 min bei 130°C): 100,0 %
Molekulargewicht (Dampfdruckosmose):
Mn: 2200 g/mol
Viskosität: 5549 mPas,
(gemessen bei 23°C mit einem Rotationsviskosimeter der Fa. Brookfield, Typ CAP 2000+, Spindel 3, Scherrate: 1333 s⁻¹)

### Herstellung von wässrigen Basislacken

### 1. Herstellung eines Vergleich-Wasserbasislacks 1

Die in der Tabelle A unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle A: Wasserbasislack 1**

| Komponente | Gewichtsteile |
|---|---|
| **Wässrige Phase** | |
| 3%ige Na-Mg-Schichtsilikatlösung | 26,2 |
| Deionisiertes Wasser | 9,87 |
| Butylglykol | 5,3 |
| Polyester P1 | 5,6 |
| 3 Gew.%ige wässrige Rheovis® AS S130 Lösung; Rheologiemittel, erhältlich von BASF, in Wasser | 6,2 |
| Melaminformaldehydharz (Luwipal® 052 von der BASF SE) | 5,65 |
| 10%iges Dimethylethanolamin in Wasser | 0,7 |
| Polyurethanmodifiziertes Polyacrylat; hergestellt gemäß S. 7, Z. 55 bis S.8, Z. 23 der DE 4437535 A1 | 3,9 |
| Pluriol® P 900 der Firma BASF SE | 1,1 |
| Byk-347® der Firma Altana | 0,5 |
| Wie oben beschriebene hergestellte Mischpolymerisat-Dispersion (MP) | 6,63 |
| Acrylierte Polyurethandispersion (Bindemitteldispersion A gemäß WO 91/15528) | 4,4 |
| Rotpaste | 7,4 |
| Rußpaste | 6,8 |
| 2-Ethylhexanol | 1 |
| Tributoxyethylphosphat | 1 |
| Paliocrom-Schlämme | 2,25 |
| Mica-Schlämme | 3,8 |

| **Organische Phase** | |
|---|---|
| Aluminiumpigment, erhältlich von Firma Altana-Eckart | 0,45 |
| Butylglykol | 0,5 |
| Wie oben beschriebene hergestellte Mischpolymerisat-Dispersion (MP) | 0,75 |

### Herstellung der Rotpaste:

Die Rotpaste wurde aus 40 Gewichtsteilen einer gemäß der internationalen Patentanmeldung WO 91/15528 Bindemitteldispersion A hergestellten acrylierten Polyurethandispersion, 34,5 Gewichtsteilen Cinilex® DPP Rot, 2 Gewichtsteilen eines handelsüblichen Polyethers (Pluriol® P900 der Firma BASF SE), Gewichtsteilen 1-Propoxy-2-propanol und 20,5 Gewichtsteilen deionisiertem Wasser hergestellt.

### Herstellung der Rußpaste:

Die Rußpaste wurde aus 25 Gewichtsteilen einer gemäß der internationalen Patentanmeldung WO 91/15528 Bindemitteldispersion A hergestellten acrylierten Polyurethandispersion, 10 Gewichtsteilen Ruß, 0,1 Gewichtsteilen Methylisobutylketon, 1,36 Gewichtsteilen Dimethylethanolamin (10%ig in VE-Wasser), 2 Gewichtsteilen eines handelsüblichen Polyethers (Pluriol® P900 der Firma BASF SE) und 61,45 Gewichtsteilen deionisiertem Wasser hergestellt.

### Herstellung der Paliocrom-Schlämme:

Die Paliocrom-Schlämme wurde durch Vermischen mittels eines Rührorgans von 0,75 Gewichtsteilen Butylglykol, 0,75 Gewichtsteilen der wie oben beschrieben hergestellten Mischpolymerisat-Dispersion (MP) und 0,75 Gewichtsteilen des handelsüblichen Paliocrom Orange L 2804 der Firma BASF SE erhalten.

### Herstellung der Mica-Schlämme:

Die Mica-Schlämme wurde durch Vermischen mittels eines Rührorgans von 2 Gewichtsteilen Butylglykol, 1,35 Gewichtsteilen eines Mischlacks, hergestellt nach EP 1534792 - B1, Spalte 11, Zeile 1-17 (ohne Aluminiumpaste), und 0,45 Gewichtsteilen der handelsüblichen Mica Mearlin Ext. Super Copper 359Z der Firma Merck erhalten.

### 1.1 Herstellung eines Vergleich-Wasserbasislacks 2

Der Wasserbasislack 2 wurde analog Tabelle A hergestellt, wobei allerdings statt dem Polyester P1 das wie oben beschrieben hergestellte Reaktionsprodukt (R) eingesetzt wurde. Die durch den unterschiedlichen Festkörper der Dispersion enthaltend P1 und dem erhaltenen Reaktionsprodukt R bedingten unterschiedlichen Mengen Butylglykol wurden im Wasserbasislack 2 durch entsprechenden Zusatz von Butylglykol ausgeglichen.

### 1.2 Herstellung eines erfindungsgemäßen Wasserbasislacks E1.

Der Wasserbasislack E1 wurde analog dem Vergleichs-Wasserbasislack 2 hergestellt, wobei allerdings statt der acrylierten Polyurethandispersion (Bindemitteldispersion A gemäß WO 91/15528) ein Polyurethanharz (X) eingesetzt wurde. Die Herstellung des Polyurethanharzes (X) richtet sich nach WO 92/15405, Seite 14, Zeile 13 bis Seite 15, Zeile 13. Das Harz besitzt eine Säurezahl von 25 mg KOH/g und ein zahlenmittleres Molekulargewicht von 12000 g/mol. Die durch den unterschiedlichen Festkörper der Bindemitteldispersion A gemäß WO 91/15528 und der Dispersion enthaltend das Polyurethanharz (X) bedingten unterschiedlichen Mengen an Wasser wurden im Wasserbasislack E1 durch entsprechend geringeren Zusatz von Wasser (siehe Position 2 in Tabelle A) ausgeglichen.

### 1.3 Herstellung eines erfindungsgemäßen Wasserbasislacks E2.

Die Herstellung erfolgte analog des Wasserbasislacks E1, wobei allerdings ein anderes Polyurethanharz (X) eingesetzt wurde. Die Herstellung des in Wasserbasislack E2 eingesetzten Polyurethanharzes richtet sich nach WO 92/15405, Seite 15, Zeile 23 bis 28. Das Harz besitzt eine Säurezahl von 25 mg KOH/g und ein zahlenmittleres Molekulargewicht von 5000 g/mol.

### 1.4 Herstellung eines erfindungsgemäßen Wasserbasislacks E3.

Die Herstellung erfolgte analog des Wasserbasislacks E1, wobei allerdings ein anderes Polyurethanharz (X) eingesetzt wurde. Die Herstellung des in Wasserbasislack E3 eingesetzten Polyurethanharzes richtet sich nach WO 92/15405, Seite 15, Zeile 16 bis 20. Das Harz besitzt eine Säurezahl von 20 mg KOH/g und ein zahlenmittleres Molekulargewicht von 11000 g/mol.

### Vergleich zwischen den Wasserbasislacken 1, 2 und E1 bis E3

Zur Bestimmung der Nadelstichgrenze und Nadelstichanzahl wurden Mehrschichtlackierungen nach der folgenden allgemeinen Vorschrift hergestellt:

Ein mit einer Füllerlackierung beschichtetes Stahlblech der Abmessungen 30 x 50 cm wurde an einer Längskante mit einem Klebstreifen versehen, um nach der Beschichtung die Schichtdickendifferenzen ermitteln zu können. Der jeweilige Wasserbasislack wurde keilförmig elektrostatisch appliziert. Die resultierende Wasserbasislackschicht wurde während einer Minute bei Raumtemperatur abgelüftet und anschließend während 10 Minuten im Umluftofen bei 70°C getrocknet. Auf die getrocknete Wasserbasislackschicht wurde ein üblicher Zweikomponentenklarlack in einer Schichtdicke von 35 bis 45 Mikrometern pneumatisch appliziert. Die resultierende Klarlackschicht wurde während 20 Minuten bei Raumtemperatur abgelüftet. Anschließend wurden die Wasserbasislackschicht und die Klarlackschicht in einem Umluftofen während 20 Minuten bei 140°C gehärtet. Nach der visuellen Auswertung der Nadelstiche in der resultierenden keilförmigen Mehrschichtlackierung wurde die Schichtdicke der Nadelstichgrenze bestimmt. Die Ergebnisse finden sich in der Tabelle 1.

**Tabelle 1: Nadelstichgrenze und Nadelstichanzahl der Wasserbasislacke 1, 2 und E1 bis E3**

| **WBL** | **Nadelstichgrenze (Mikrometer)** | **Nadelstichanzahl** |
|---|---|---|
| 1 | 10 | 161 |
| 2 | 21 | 54 |
| E1 | 28 | 31 |
| E2 | 26 | 37 |
| E3 | 25 | 24 |

Die Ergebnisse untermauern, dass der Einsatz eines erfindungsgemäßen Beschichtungsmittels als Basislack bei der Herstellung von Mehrschichtlackierungen die Stabilität dieser Mehrschichtlackierungen gegen Nadelstiche deutlich erhöht.

## Patentansprüche

1. Wässriges Beschichtungsmittel enthaltend
mindestens eine wässrige Dispersion enthaltend mindestens ein Mischpolymerisat (MP), wobei das Mischpolymerisat (MP) herstellbar ist, durch
(i) Vorlage einer wässrigen Dispersion mindestens eines Polyurethans, und anschließend
(ii) Polymerisation einer Mischung von olefinisch ungesättigten Monomeren in Gegenwart des Polyurethans aus (i),
wobei
(a) ein wasserlöslicher Initiator verwendet wird,
(b) die Zudosierung der olefinisch ungesättigten Monomere so erfolgt, dass in der Reaktionslösung eine Konzentration von 6,0 Gew.-%, bezogen auf die Gesamtmenge an zur Polymerisation eingesetzten olefinisch ungesättigten Monomeren, während der gesamten Reaktionsdauer nicht überschritten wird, und
(c) die Mischung der olefinisch ungesättigten Monomere mindestens ein mehrfach olefinisch ungesättigtes Monomer enthält,
mindestens ein lineares hydroxyfunktionelles Reaktionsprodukt (R) mit einer Säurezahl kleiner 20 mg KOH/g, bei dessen Herstellung mindestens eine Verbindung (v) enthaltend zwei funktionelle Gruppen (v.a) sowie einen zwischen den funktionellen Gruppen angeordneten aliphatischen oder araliphatischen Kohlenwasserstoffrest (v.b) mit 12 bis 70 Kohlenstoffatomen eingesetzt wird,
sowie
mindestens ein Polyurethanharz (X), bei dessen Herstellung mindestens eine Verbindung (x.1) enthaltend mindestens eine Carbonsäuregruppe und mindestens eine gegenüber Isocyanatgruppen reaktive Gruppe eingesetzt wird.

2. Beschichtungsmittel nach Anspruch 1, **dadurch gekennzeichnet, dass** die in Schritt (ii) eingesetzte Mischung der olefinisch ungesättigten Monomere 0,1 bis 6,0 mol-% mehrfach olefinisch ungesättigtes Monomere enthält.

3. Beschichtungsmittel nach Anspruch 1 oder 2, **dadurch gekennzeichnet, dass** die in Schritt (ii) eingesetzte Mischung der olefinisch ungesättigten Monomere Allylmethacrylat enthält und keine weiteren mehrfach olefinisch ungesättigten Monomere enthalten sind.

4. Beschichtungsmittel nach einem der Ansprüche 1 bis 3, **dadurch gekennzeichnet, dass** die funktionellen Gruppen (v.a) der mindestens einen Verbindung (v) ausgewählt sind aus der Gruppe bestehend aus Hydroxylgruppen und Carboxylgruppen.

5. Beschichtungsmittel nach einem der Ansprüche 1 bis 4, **dadurch gekennzeichnet, dass** bei der Herstellung des Reaktionsprodukts (R) dimere Fettsäuren und/oder Dimerdiole als Verbindung (v) eingesetzt werden.

6. Beschichtungsmittel nach einem der Ansprüche 1 bis 5, **dadurch gekennzeichnet, dass** das Reaktionsprodukt (R) herstellbar ist durch Umsetzung von Dimerfettsäuren mit aliphatischen, araliphatischen und/oder aromatischen dihydroxyfunktionellen Verbindungen mit einem zahlenmittleren Molekulargewicht von 120 bis 6000 g/mol, wobei als dihydroxyfunktionelle Verbindungen Polyetherdiole, Polyesterdiole und/oder Dimerdiole eingesetzt werden.

7. Beschichtungsmittel nach einem der Ansprüche 1 bis 6, **dadurch gekennzeichnet, dass** das mindestens eine Reaktionsprodukt (R) ausgewählt wird aus der Gruppe bestehend aus
- Reaktionsprodukten herstellbar durch Umsetzung von Dimerfettsäuren mit mindestens einer aliphatischen dihydroxyfunktionellen Verbindung der allgemeinen Strukturformel (I): 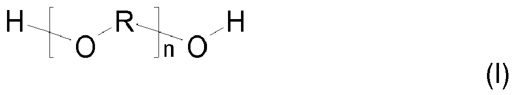 wobei es sich bei R um einen C₃- bis C₆-Alkylenrest handelt und n entsprechend so gewählt ist, dass die Verbindung der Formel (I) ein zahlenmittleres Molekulargewicht von 120 bis 6000 g/mol besitzt, die Dimerfettsäuren und die Verbindungen der Formel (I) in einem molaren Verhältnis von 0,7/2,3 bis 1,6/1,7 eingesetzt werden und wobei das resultierende Reaktionsprodukt ein zahlenmittleres Molekulargewicht von 600 bis 40000 g/mol und eine Säurezahl von kleiner 10 mg KOH/g besitzt,
- Reaktionsprodukten herstellbar durch Umsetzung von Dimerfettsäuren mit mindestens einer dihydroxyfunktionellen Verbindung der allgemeinen Strukturformel (II): 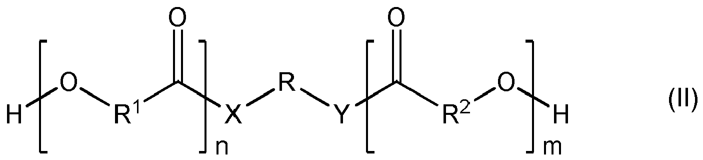 wobei
R für einen divalenten organischen Rest umfassend 2 bis 10 Kohlenstoffatome steht,
R¹und R² unabhängig voneinander für geradkettige oder verzweigte Alkylenreste mit 2 bis 10 Kohlenstoffatomen stehen,
X und Y unabhängig voneinander für O, S oder NR³ stehen, worin R³ für Wasserstoff oder einen Alkylrest mit 1 bis 6 Kohlenstoffatomen steht, und m und n entsprechend so gewählt sind, dass die Verbindung der Formel (II) ein zahlenmittleres Molekulargewicht von 450 bis 2200 g/mol besitzt,
wobei die Komponenten (a) und (b) in einem molaren Verhältnis von 0,7/2,3 bis 1,6/1,7 eingesetzt werden und das resultierende Reaktionsprodukt ein zahlenmittleres Molekulargewicht von 1200 bis 5000 g/mol und eine Säurezahl von kleiner 10 mg KOH/g besitzt,
- Reaktionsprodukte herstellbar durch Umsetzung von Dimerfettsäuren mit Dimerdiolen, wobei die Dimerfettsäuren und Dimerdiole in einem molaren Verhältnis von 0,7/2,3 bis 1,6/1,7 eingesetzt werden und das resultierende Reaktionsprodukt ein zahlenmittleres Molekulargewicht von 1200 bis 5000 g/mol und eine Säurezahl von kleiner 10 mg KOH/g besitzt.

8. Beschichtungsmittel nach einem der Ansprüche 1 bis 7, **dadurch gekennzeichnet, dass** die zur Herstellung des Polyurethanharzes (X) eingesetzte mindestens eine Verbindung (x.1) ausgewählt wird aus der Gruppe bestehend aus carboxyfunktionellen Polyetherpolyolen, carboxyfunktionellen Polyesterpolyolen und/oder monomeren Monocarbonsäuren enthaltend zwei Hydroxylgruppen.

9. Beschichtungsmittel nach einem der Ansprüche 1 bis 8, **dadurch gekennzeichnet, dass** zur Herstellung des Polyurethanharzes (X) jedenfalls mindestens eine alpha, alpha Dimethylolalkansäure als Verbindung (x.1) eingesetzt wird.

10. Beschichtungsmittel nach Anspruch 9, **dadurch gekennzeichnet, dass** die mindestens eine alpha, alpha Dimethylolalkansäure ausgewählt wird aus der Gruppe bestehend aus 2,2-Dimethylolessigsäure, 2,2-Dimethylolpropionsäure, 2,2-Dimethylolbuttersäure und/oder 2,2-Dimethylolpentansäure.

11. Beschichtungsmittel nach einem der Ansprüche 1 bis 10, **dadurch gekennzeichnet, dass** zudem mindestens ein von (MP), (R) und (X) unterschiedliches hydroxyfunktionelles Polymer als Bindemittel ausgewählt aus der Gruppe bestehend aus Polyurethanen, Polyestern, Polyacrylaten und Mischpolymerisaten dieser Polymere, ein Melaminharz als Vernetzungsmittel und mindestens ein Farb- und/oder Effektpigment enthalten ist.

12. Verfahren zur Herstellung von Mehrschichtlackierungen, bei dem
(1) ein wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
**dadurch gekennzeichnet ist, dass** der in Stufe (1) eingesetzte wässrige Basislack ein Beschichtungsmittel gemäß einem der Ansprüche 1 bis 11 ist.

13. Verfahren nach Anspruch 12, **dadurch gekennzeichnet, dass** als Substrat ein metallisches Substrat oder ein Kunststoffsubstrat eingesetzt wird, wobei das Substrat unbehandelt, vorbehandelt oder vorbeschichtet ist.

14. Mehrschichtlackierung, hergestellt nach einem Verfahren gemäß Anspruch 12 oder 13.

15. Verwendung eines Beschichtungsmittels gemäß einem der Ansprüche 1 bis 11 zur Verbesserung der Stabilität von Mehrschichtlackierungen gegen optische Fehlstellen.
